# EUROPEAN PATENT SPECIFICATION

(11) **EP 4 515 457 B1**
(45) Date of publication and mention of the grant of the patent: **18.03.2026**
(21) Application number: 23721301.2
(22) Date of filing: 19.04.2023
(51) Int. Cl.: G06V 10/82, G06V 20/69, G06N 3/0455, G06N 3/09, G06N 3/088, G06N 3/0464

(54) **MULTIPLE-INSTANCE LEARNING BASED ON REGIONAL EMBEDDINGS**
LERNEN MEHRERER INSTANZEN AUF BASIS REGIONALER EINBETTUNGEN
APPRENTISSAGE À INSTANCES MULTIPLES BASÉ SUR DES INTÉGRATIONS RÉGIONALES

(30) Priority: 26.04.2022 US 202263334903 P
(43) Date of publication of application: 05.03.2025
(73) Proprietor: Bayer Aktiengesellschaft, 51373 Leverkusen (DE)
(72) Inventor: HÖHNE, Johannes, 51373 Leverkusen (DE); CERSOVSKY, Josef, 51373 Leverkusen (DE); LENGA, Matthias, 51373 Leverkusen (DE); DE ZOETE, Jacob Coenraad, 51373 Leverkusen (DE); SCHMITZ, Arndt, 51373 Leverkusen (DE); BAL, Tricia, Whippany, New Jersey 07981 (US); PELEKANOU, Vasiliki, Whippany, New Jersey 07981 (US); DI TOMASO, Emmanuelle, Whippany, New Jersey 07981 (US)
(74) Representative: BIP Patents
(86) International application number: PCT/EP2023/060051
(87) International publication number: WO 2023/208663

(56) References cited:
- ANDREI V KONSTANTINOV ET AL: "Multi-Attention Multiple Instance Learning", ARXIV.ORG, 11 December 2021 (2021-12-11), XP091115525, Retrieved from the Internet <URL:https://arxiv.org/pdf/2112.06071.pdf>
- HÖHNE JOHANNES ET AL: "Detecting genetic alterations in BRAF and NTRK as oncogenic drivers in digital pathology images: towards model generalization within and across multiple thyroid cohorts", PROCEEDINGS OF THE MICCAI WORKSHOP ON COMPUTATIONAL PATHOLOGY, vol. 156, 27 September 2021 (2021-09-27), XP093064231
- ILSE M. ET AL: "Attention-based Deep Multiple Instance Learning", PROCEEDINGS OF THE 35TH INTERNATIONAL CONFERENCE ON MACHINE LEARNING, 10 July 2018 (2018-07-10), XP055696549
- ILSE M. ET AL: "Attention-based Deep Multiple Instance Learning - Appendix", PROCEEDINGS OF THE 35TH INTERNATIONAL CONFERENCE ON MACHINE LEARNING, 10 July 2018 (2018-07-10), XP093064281, Retrieved from the Internet <URL:http://proceedings.mlr.press/v80/ilse18a/ilse18a-supp.pdf>

## Description

### FIELD

Systems, methods, and computer programs disclosed herein relate to training a machine learning model and using the trained machine learning model to classify images, preferably medical images, using multiple-instance learning techniques. The machine learning model can be trained, and the trained machine learning model can be used for various purposes, in particular for the detection, identification and/or characterization of tumor types and/or gene mutations in tissues.

### BACKGROUND

Digital pathology is an image-based information environment enabled by computer technology that allows for the management of information generated from a digital slide. Scanning converts tissues on glass slides into digital whole-slide images for assessment, sharing, and analysis.

Artificial intelligence methods can be used to analyze the digital images, e.g., for diagnostic performance improvement, discovery purposes, patient selection, treatment effects monitoring, etc.

The field of digital pathology and evaluation of digital whole slide images using artificial intelligence has experienced incredible growth in recent years. For example, WO2020229152A1 discloses a method of identifying signs indicative of an NTRK oncogenic fusion within patient data comprising a histopathological image of tumor tissue using a deep neural network; C.-L. Chen *et al.* disclose a whole-slide training approach to pathological classification of lung cancer types using deep learning (https://doi.org/10.1038/s41467-021-21467-y).

However, deep learning for digital pathology is hindered by the extremely high spatial resolution of whole-slide images. Whole-slide images are usually multi-gigabyte images with typical resolutions of 100000 × 100000 pixels, present high morphological variance, and often contain various types of artifacts.

Therefore, many successful approaches to train deep learning models on whole-slide images do not use the entire image as input, but instead extract and use only a number of image patches. Image patches, also known as image tiles, are typically rectangular regions with dimensions ranging from 32 × 32 pixels to 10000 × 10000 pixels.

In order to train a machine learning model, training data is required. Such training data may include images of tissue that is known to be tumor tissue or healthy tissue. The type of tumor present in each case may also be known. This data is also called labeled data and the labeling is usually done by experts.

Patch-level labeling by expert pathologists is very time consuming. In specific clinical scenarios such as NTRK oncogenic fusion detection, a patch-level labeling might even be impossible as even the pathology experts may not be able to identify any decisive pattern.

Due to these practical limitations, ground truth labeling in most cases is done at the level of the whole-slide images rather than at the level of individual patches. Labeled whole-slide images are weakly annotated data that can be analyzed using multiple-instance learning techniques.

Unlike traditional machine learning models, multiple-instance learning involves a set of bags that are labeled such that each bag consists of many unlabeled instances, i.e., the instances in the bags have no label information. The goal of multiple-instance learning can be to train a classifier that assigns labels to test bags or assigns labels to the unlabeled instances in the bags.

Each whole-slide image can be considered as a bag that contains many instances of patches. Multiple-instance learning uses training sets that consist of bags where each bag contains several instances that are either positive or negative examples for the class of interest, but only bag-level labels are given, and the instance-level labels are unknown during training.

A. V. Konstantinov et al. propose to base a classification not on bags of individual patches, but to take into account adjacent patches (arXiv:2112.06071v1 [cs.LG]).

However, there is still a need to address the difficulties of detecting and/or characterizing diseases based on weakly annotated data.

### SUMMARY

This need is met by the present disclosure.

The approach of the present disclosure is to classify an image not only on the basis of one or more selected patches, but also to consider the regions in which selected patches are located.

**In** a first aspect, the present disclosure provides a computer-implemented multiple-instance learning method for training a first machine learning model for classifying images, the method comprising:
- providing the first machine learning model, wherein the first machine learning model is configured to receive an image and assign the image to one of two classes,
- providing a pre-trained second machine learning model, wherein the second machine learning model is configured and trained to generate a patch embedding based on a patch of an image,
- receiving training images, each training image being assigned to one of the at least two classes,
- for each training image:
   ∘ generating a plurality of patches based on the training image,
   ∘ generating a patch embedding for each patch of the plurality of patches using the second machine learning model,
   ∘ generating a multitude of regions, each region comprising a number of patches,
   ∘ generating a regional embedding for each region based on patch embeddings of patches comprised by the region,
- training the first machine learning model using the training images, wherein the training comprises:
   ∘ receiving a training image,
   ∘ selecting a number of patches from the training image,
   ∘ generating a patch embedding for each selected patch,
   ∘ generating a global embedding based on the patch embeddings of the selected patches and the regional embeddings of regions comprising the selected patches,
   ∘ assigning the global embedding to one of the at least two classes,
   ∘ computing a loss based on a difference between the class to which the global embedding is assigned and the class to which the training image is assigned,
   ∘ modifying parameters of the first machine learning model based on the computed loss,
- storing the trained first machine learning model and/or using the trained first machine learning model to classify one or more new images,
wherein each region contains a number of patches in the range from 10 to 1000, wherein the regional embeddings are generated by the pre-trained second machine learning model in advance of the training of the first machine learning model, wherein the first machine learning model is trained, and the trained first machine learning model is used to assign histopathological images of tissues from patients to one of at least two classes, wherein one class comprises images showing tissue in which a NTRK or BRAF gene mutation is present.

**In another** aspect, the present disclosure provides a computer system comprising:
a processor; and
a memory storing an application program configured to perform, when executed by the processor, an operation, the operation comprising:
   - providing a first machine learning model, wherein the first machine learning model is configured to receive an image and assign the image to one of two classes,
   - providing a pre-trained second machine learning model, wherein the second machine learning model is configured and trained to generate a patch embedding based on a patch of an image,
   - receiving training images, each training image being assigned to one of the at least two classes,
   - for each training image:
      ∘ generating a plurality of patches based on the training image,
      ∘ generating a patch embedding for each patch of the plurality of patches using the second machine learning model,
      ∘ generating a multitude of regions, each region comprising a number of patches,
      ∘ generating a regional embedding for each region based on patch embeddings of patches comprised by the region,
   - training the first machine learning model using the training images, wherein the training comprises:
      ∘ receiving a training image,
      ∘ selecting a number of patches from the training image,
      ∘ generating a patch embedding for each selected patch,
      ∘ generating a global embedding based on the patch embeddings of the selected patches and the regional embeddings of regions comprising the selected patches,
      ∘ assigning the global embedding to one of the at least two classes,
      ∘ computing a loss based on a difference between the class to which the global embedding is assigned and the class to which the training image is assigned,
      ∘ modifying parameters of the first machine learning model based on the computed loss,
   - storing the trained first machine learning model and/or using the trained first machine learning model to classify one or more new images,
      - wherein each region contains a number of patches in the range from 10 to 1000, wherein the regional embeddings are generated by the pre-trained second machine learning model in advance of the training of the first machine learning model, wherein the first machine learning model is trained, and the trained first machine learning model is used to assign histopathological images of tissues from patients to one of at least two classes, wherein one class comprises images showing tissue in which a NTRK or BRAF gene mutation is present.

In another aspect, the present disclosure provides a non-transitory computer readable medium having stored thereon software instructions that, when executed by a processor of a computer system, cause the computer system to execute the following steps:
- providing a first machine learning model, wherein the first machine learning model is configured to receive an image and assign the image to one of two classes,
- providing a pre-trained second machine learning model, wherein the second machine learning model is configured and trained to generate a patch embedding based on a patch of an image,
- receiving training images, each training image being assigned to one of the at least two classes,
- for each training image:
   ∘ generating a plurality of patches based on the training image,
   ∘ generating a patch embedding for each patch of the plurality of patches using the second machine learning model,
   ∘ generating a multitude of regions, each region comprising a number of patches,
   ∘ generating a regional embedding for each region based on patch embeddings of patches comprised by the region,
- training the first machine learning model using the training images, wherein the training comprises:
   ∘ receiving a training image,
   ∘ selecting a number of patches from the training image,
   ∘ generating a patch embedding for each selected patch,
   ∘ generating a global embedding based on the patch embeddings of the selected patches and the regional embeddings of regions comprising the selected patches,
   ∘ assigning the global embedding to one of the at least two classes,
   ∘ computing a loss based on a difference between the class to which the global embedding is assigned and the class to which the training image is assigned,
   ∘ modifying parameters of the first machine learning model based on the computed loss,
- storing the trained first machine learning model and/or using the trained first machine learning model to classify one or more new images,
wherein each region contains a number of patches in the range from 10 to 1000, wherein the regional embeddings are generated by the pre-trained second machine learning model in advance of the training of the first machine learning model, wherein the first machine learning model is trained, and the trained first machine learning model is used to assign histopathological images of tissues from patients to one of at least two classes, wherein one class comprises images showing tissue in which a NTRK or BRAF gene mutation is present.

In another aspect, the present disclosure relates to the use of a trained machine learning model for the detection, identification, and/or characterization of tumor types and/or gene mutations in tissues, wherein training of the machine learning model comprises:
- providing a first machine learning model, wherein the first machine learning model is configured to receive an image and assign the image to one of two classes,
- providing a pre-trained second machine learning model, wherein the second machine learning model is configured and trained to generate a patch embedding based on a patch of an image,
- receiving training images, each training image being assigned to one of the at least two classes,
- for each training image:
   ∘ generating a plurality of patches based on the training image,
   ∘ generating a patch embedding for each patch of the plurality of patches using the second machine learning model,
   ∘ generating a multitude of regions, each region comprising a number of patches,
   ∘ generating a regional embedding for each region based on patch embeddings of patches comprised by the region,
- training the first machine learning model using the training images, wherein the training comprises:
   ∘ receiving a training image,
   ∘ selecting a number of patches from the training image,
   ∘ generating a patch embedding for each selected patch,
   ∘ generating a global embedding based on the patch embeddings of the selected patches and the regional embeddings of regions comprising the selected patches,
   ∘ assigning the global embedding to one of the at least two classes,
   ∘ computing a loss based on a difference between the class to which the global embedding is assigned and the class to which the training image is assigned,
   ∘ modifying parameters of the first machine learning model based on the computed loss,
   ∘ storing the trained first machine learning model and/or using the trained first machine learning model to classify one or more new images,
wherein each region contains a number of patches in the range from 10 to 1000, wherein the regional embeddings are generated by the pre-trained second machine learning model in advance of the training of the first machine learning model, wherein the first machine learning model is trained, and the trained first machine learning model is used to assign histopathological images of tissues from patients to one of at least two classes, wherein one class comprises images showing tissue in which a NTRK or BRAF gene mutation is present.

In another aspect, the present disclosure relates to a method for classifying an image, the method comprising:
- providing a first machine learning model, wherein the first machine learning model is configured to receive an image and assign the image to one of two classes,
- providing a pre-trained second machine learning model, wherein the second machine learning model is configured and trained to generate a patch embedding based on a patch of an image,
- receiving training images, each training image being assigned to one of the at least two classes,
- for each training image:
   ∘ generating a plurality of patches based on the training image,
   ∘ generating a patch embedding for each patch of the plurality of patches using the second machine learning model,
   ∘ generating a multitude of regions, each region comprising a number of patches,
   ∘ generating a regional embedding for each region based on patch embeddings of patches comprised by the region,
- training the first machine learning model using the training images, wherein the training comprises:
   ∘ receiving a training image,
   ∘ selecting a number of patches from the training image,
   ∘ generating a patch embedding for each selected patch,
   ∘ generating a global embedding based on the patch embeddings of the selected patches and the regional embeddings of regions comprising the selected patches,
   ∘ assigning the global embedding to one of the at least two classes,
   ∘ computing a loss based on a difference between the class to which the global embedding is assigned and the class to which the training image is assigned,
   ∘ modifying parameters of the first machine learning model based on the computed loss,
- receiving a new image,
- generating a plurality of patches based on the new image,
- inputting the patches into the trained first machine learning model,
- receiving a classification result from the trained first machine learning model,
- outputting the classification result,
wherein each region contains a number of patches in the range from 10 to 1000, wherein the regional embeddings are generated by the pre-trained second machine learning model in advance of the training of the first machine learning model, wherein the first machine learning model is trained, and the trained first machine learning model is used to assign histopathological images of tissues from patients to one of at least two classes, wherein one class comprises images showing tissue in which a NTRK or BRAF gene mutation is present.

### DETAILED DESCRIPTION

The invention will be more particularly elucidated below without distinguishing between the aspects of the disclosure (method, computer system, computer-readable storage medium, use). On the contrary, the following elucidations are intended to apply analogously to all the aspects of the disclosure, irrespective of in which context (method, computer system, computer-readable storage medium, use) they occur.

If steps are stated in an order in the present description or in the claims, this does not necessarily mean that the disclosure is restricted to the stated order. On the contrary, it is conceivable that the steps can also be executed in a different order or else in parallel to one another, unless one step builds upon another step, this absolutely requiring that the building step be executed subsequently (this being, however, clear in the individual case). The stated orders are thus preferred embodiments of the invention.

As used herein, the articles "a" and "an" are intended to include one or more items and may be used interchangeably with "one or more" and "at least one." As used in the specification and the claims, the singular form of "a", "an", and "the" include plural referents, unless the context clearly dictates otherwise. Where only one item is intended, the term "one" or similar language is used. Also, as used herein, the terms "has", "have", "having", or the like are intended to be open-ended terms. Further, the phrase "based on" is intended to mean "based at least partially on" unless explicitly stated otherwise. Further, the phrase "based on" may mean "in response to" and be indicative of a condition for automatically triggering a specified operation of an electronic device (e.g., a controller, a processor, a computing device, etc.) as appropriately referred to herein.

Some implementations of the present disclosure will be described more fully hereinafter with reference to the accompanying drawings, in which some, but not all implementations of the disclosure are shown. Indeed, various implementations of the disclosure may be embodied in many different forms and should not be construed as limited to the implementations set forth herein; rather, these example implementations are provided so that this disclosure will be thorough and complete, and will fully convey the scope of the disclosure to those skilled in the art.

The present disclosure provides means for training a machine learning model and using the trained machine learning model for prediction purposes.

Such a "machine learning model", as used herein, may be understood as a computer implemented data processing architecture. The machine learning model can receive input data and provide output data based on that input data and on parameters of the machine learning model. The machine learning model can learn a relation between input data and output data through training. In training, parameters of the machine learning model may be adjusted in order to provide a desired output for a given input.

The process of training a machine learning model involves providing a machine learning algorithm (that is the learning algorithm) with training data to learn from. The term "trained machine learning model" refers to the model artifact that is created by the training process. The training data must contain the correct answer, which is referred to as the target. The learning algorithm finds patterns in the training data that map input data to the target, and it outputs a trained machine learning model that captures these patterns.

In the training process, training data are inputted into the machine learning model and the machine learning model generates an output. The output is compared with the (known) target. Parameters of the machine learning model are modified in order to reduce the deviations between the output and the (known) target to a (defined) minimum.

In general, a loss function can be used for training, where the loss function can quantify the deviations between the output and the target. The loss function may be chosen in such a way that it rewards a wanted relation between output and target and/or penalizes an unwanted relation between an output and a target. Such a relation can be, e.g., a similarity, or a dissimilarity, or another relation.

A loss function can be used to calculate a loss for a given pair of output and target. The aim of the training process can be to modify (adjust) parameters of the machine learning model in order to reduce the loss to a (defined) minimum.

The machine learning model of the present disclosure is trained to assign an image to one of at least two classes.

The term "image" as used herein means a data structure that represents a spatial distribution of a physical signal. The spatial distribution may be of any dimension, for example 2D, 3D or 4D. The spatial distribution may be of any shape, for example forming a grid and thereby defining pixels, the grid being possibly irregular or regular. The physical signal may be any signal, for example color, level of gray, depth, surface or volume occupancy, such that the image may be a 2D or 3D RGB/grayscale/depth image, or a 3D surface/volume occupancy model.

For simplicity, the invention is described herein mainly on the basis of two-dimensional images comprising a rectangular (or square) array of pixels. However, this is not to be understood as limiting the invention to such images. Those skilled in machine learning based on image data will know how to apply the invention to image data comprising more dimensions and/or being in a different format.

In a preferred embodiment, the image is a medical image.

A "medical image" is a preferably visual representation of the human body or a part thereof or a visual representation of the body of an animal or a part thereof. Medical images can be used, e.g., for diagnostic and/or treatment purposes.

Techniques for generating medical images include X-ray radiography, computerized tomography, fluoroscopy, magnetic resonance imaging, ultrasonography, endoscopy, elastography, tactile imaging, thermography, microscopy, positron emission tomography and others.

Examples of medical images include CT (computer tomography) scans, X-ray images, MRI (magnetic resonance imaging) scans, fluorescein angiography images, OCT (optical coherence tomography) scans, histopathological images, ultrasound images.

In preferred embodiment, the image is a whole slide histopathological image of tissue of a human body.

In a preferred embodiment, the histopathological image is an image of a stained tissue sample. One or more dyes can be used to create the stained image. Usual dyes are hematoxylin and eosin.

The machine learning model is trained to assign the image to one of at least two classes.

The class may indicate whether the tissue shown in the image has a certain property or does not have the certain property.

The class may indicate whether there is a specific gene mutation in the tissue shown in the image.

The class may indicate whether the tissue depicted in the image is tumor tissue and/or may specify the type of tumor present in the tissue.

The class may indicate whether the subject from which the tissue depicted in the image originates has a particular disease or does not have the particular disease.

The class may indicate the severity of a particular disease.

Further options for classes are described below.

The training of the machine learning model of the present disclosure is performed based on training data. The training data comprise a plurality of training images. The term "plurality of training images" means at least 10, preferably at least 100 training images.

Each training image is labelled, i.e., it is assigned to one of the at least two classes. The labelling can be done, e.g., by (medical) experts. For example, in histopathology, it is usually known what the tissue is that is depicted in a histopathological image. It is possible, for example, to take a genetic analysis of a tissue sample and identify gene mutations. A slide and a slide image can then be generated from the tissue sample. The slide image can then be labeled accordingly with the information obtained from the gene analysis, for example.

Usually, the training images come from a number of different patients.

Especially with large images (e.g., whole slide images), usually not the complete images are used in the training and for prediction purposes, but only parts of them, due to the size of the images and the associated computing power required to process such images. Usually, a (large) image is divided into a plurality of patches.

A "patch" is one part of an image. The term "plurality of patches" means usually more than 100 patches, preferably more than 1000 patches. The number of patches and/or the shape of patches can be the same for each image or it can be different. Usually, the patches have a square or rectangular shape. In case of a square or rectangular 2D image, the resolution of a patch is usually in the range of 32 pixels x 32 pixels to 10000 pixels × 10000 pixels, preferably in the range of 128 pixels x 128 pixel to 4096 pixels x 4096 pixels.

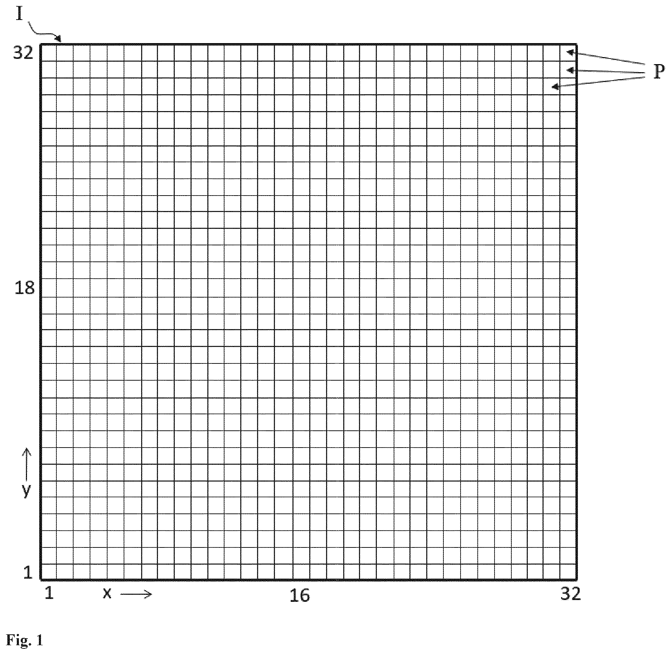

Fig. 1 shows schematically by way of example an image I which is divided into a plurality of patches P. In the example depicted in Fig. 1, the patches form a square grid in which each patch can be assigned an x-coordinate and a y-coordinate that determine its location within the grid. In Fig. 1, three of the patches are marked with an arrow. Their x, y-coordinates are: (31, 30); (32, 31); (32, 32).

The approach of the present disclosure is to classify an image not only on the basis of selected patches, but also to consider the regions in which selected patches are located.

A "region" is a collection of patches within an image; in other words, a region is composed of a number of patches. The number of patches per region can be for example 10, 12, 15, 16, 20, 30, 50, 80, 100, 120, 150, 200, 300, 400, 500, 600, 700, 800, 900, 1000, 1200 or any other number. Preferably, a region includes at least 10 patches. Usually, but not necessarily, the regions are each composed of the same number of patches. Usually, all regions have the same shape. Usually, but not necessarily, the regions are rectangular or square.

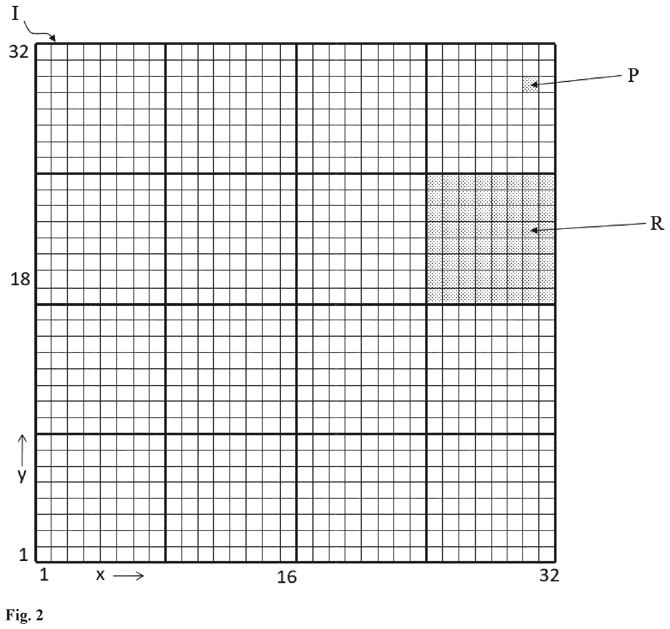

Fig. 2 shows schematically by way of example, an image I which is divided into 4 x 4 = 16 regions, each region comprising 8 x 8 = 64 patches. In Fig. 2, one patch P and one region R are highlighted by hatching.

In other word, an image can be divided into a number of regions, and each region can be divided into a number of patches. In general, each patch is composed of a number of pixels or voxels; usually, the pixels/voxels are the smallest elements of an image.

It should be noted that the order in which regions and patches are created can be reversed. So, an image can be divided into regions first and the regions can then be divided into patches, or an image can be divided into patches and groups of patches can then be combined into regions.

For classifying an image according to the present disclosure, a feature vector representing the image is generated. The feature vector serves as a basis for the classification.

During training of the machine learning model, each training image is subjected to a series of operations to generate the feature vector representing the training image.

In machine learning, a feature vector is an m-dimensional vector of numerical features that represent an object, wherein *m* is an integer greater than 0. Many algorithms in machine learning require a numerical representation of objects since such representations facilitate processing and statistical analysis. The term "feature vector" shall also include single values, matrices, tensors, and the like. The generation of a feature vector is often accompanied by a dimension reduction in order to reduce an object (e.g., an image) to those features that are important for the classification. Which features these are, the machine learning model learns during training.

Examples of feature vector generation methods can be found in various textbooks and scientific publications (see, e.g., G.A. Tsihrintzis, L.C. Jain: Machine Learning Paradigms: Advances in Deep Learning-based Technological Applications, in: Learning and Analytics in Intelligent Systems Vol. 18, Springer Nature, 2020, ISBN: 9783030497248; K. Grzegorczyk: Vector representations of text data in deep learning, Doctoral Dissertation, 2018, arXiv:1901.01695v1 [cs.CL]; M. Ilse et al.: Attention-based Deep Multiple-instance Learning, arXiv:1802.04712v4 [cs.LG]).

In the present case, the feature vector representing the (training) image is generated based on features of selected patches and features of regions in which selected patches are located. Optionally, the feature vector representing the (training) image is additionally generated based on aggregated features of further regions (regions not comprising selected patches).

A feature vector representing a (training) image is also referred to as "global embedding" in this disclosure. A feature vector representing a region is also referred to as "regional embedding" in this disclosure. A feature vector representing a patch is also referred to as "patch embedding" in this disclosure.

Thus, the classification of an image is not only based on a number of selected patches and optionally neighbor patches, as disclosed in the prior art, but also on regional features of the image. These regional features are fused with the local features of selected patches, and optionally patches adjacent to the selected patches, to form a global embedding.

To keep the computational effort low when training the machine learning model and when using the trained machine learning model for prediction, features of patches and/or regions can be determined in advance for each (training) image using a pre-trained machine learning model.

In order to distinguish the pre-trained machine learning model - which can be used for feature extraction and feature vector generation for patches and/or regions - from the machine learning model to be trained, in this disclosure the machine learning model to be trained is referred to as the "first machine learning model", and the pre-trained machine learning model is referred to as the "second machine learning model".

The term "pre-trained" means that the second machine learning model is already trained but can be trained further. In particular, the term "pre-trained" means that the second machine learning model can be used when training the first model but is not necessarily trained with it.

The second machine learning model is configured and trained to generate a patch embedding based on a patch of an image. The second machine learning model can also be configured and trained to generate a regional embedding representing a region based on patches comprised by the region. More details about the second machine learning model are provided below.

In a first step, the training images are received/provided. The training images can be provided by a separate computer system and/or by a device for the generation of (preferably medical) images and/or read out from a data memory.

For each training image, a plurality of patches is generated, e.g., by dividing the training image into the plurality of patches.

For each patch of the plurality of patches, a patch embedding is generated. The patch embeddings are generated using the second machine learning model. As already described above, the second machine learning model is configured and is already trained to generate a patch embedding based on a patch of an image. In one embodiment, the second machine learning model is not trained together with the first machine learning model. In other words: parameters of the second machine learning model for the generation of the patch embeddings are preferably fixed and not trainable. Therefore, it is possible to generate and save the patch embeddings for all the training images in advance to and separately from the training of the first machine learning model. The patch embeddings can then be used (e.g., at a later time) to train the first machine learning model.

For each training image, a multitude of regions is generated, each region comprising a number of patches. This can also be done in advance to and separately from the training of the first machine learning model.

For each region, a regional embedding is generated based on patch embeddings of patches comprised by the region.

At least for a part of the regions, preferably for all regions of each training image, a regional embedding is generated. A regional embedding representing a region can be generated based on the patch embeddings of a part of the patches comprised by said region, preferably based on the patch embeddings of all the patches comprised by said region.

For the generation of the regional embeddings, the patch embeddings generated by the second machine learning model are preferably used.

It is also possible that the second machine learning model is configured and trained to i) generate patch embeddings based on patches of an image, each patch embedding representing one patch, and ii) generate regional embeddings based on patch embeddings of patches comprises by the respective region. The regional embeddings can be stored, e.g., on a data memory, and/or can be used (e.g., at a later point in time) in the training of the first machine learning model.

It is also possible that the generation of regional embeddings based on patch embeddings generated by the second machine learning model is part of the first machine learning model and, therefore, can also be a trainable process which is trained as part of the training of the first machine learning model.

A regional embedding can be generated by aggregating the respective patch embeddings. Aggregation can be done, e.g., by pooling the patch embeddings, e.g., using one or more pooling layers. Examples of pooling operations are max pooling and average pooling. Max pooling uses the maximum value of each dimension of the patch embeddings, while average pooling takes the average value. Details on the topic of pooling can be found in textbooks on artificial neural networks, see, e.g., S. Khan et al.: A Guide to Convolutional Neural Networks for Computer Vision, Morgan & Claypool Publishers 2018, ISBN 9781681730226, in particular chapter 4.2.3.

It is possible to use an attention mechanism to combine patch embeddings into a regional embedding. In machine learning, attention is a technique that mimics cognitive attention. The effect enhances some parts of the input data while diminishing other parts - the thought being that the machine learning model should devote more focus to that small but important part of the data. Learning which part of the data is more important than others is trained in the training phase.

In the present case, for example, an attention mechanism can be used as described in: A. V. Konstantinov et al.: Multi-Attention Multiple-instance Learning, arXiv:2112.06071v1 [cs.LG] and/or in M. Ilse et al.: Attention-based Deep Multiple-instance Learning, arXiv:1802.04712v4 [cs.LG].

In a further step, a number of patches is selected in a training image. The number of patches selected is usually but not necessarily smaller than the number of regions present. The number of patches selected can be random within a predefined range, i.e., there can be a minimum number of patches to be selected and/or a maximum number of patches to be selected.

The patches can be selected randomly. However, it is also possible that the patches are selected to cover as large a number of regions as possible. It is also possible that patches are selected to cover the image as uniformly as possible. It is also possible that more patches are selected in some areas of the image than in other areas.

For each selected patch, a patch embedding is generated. The generation of patch embeddings of selected patches is preferably done by the first machine learning model, and, therefore, is preferably a trainable process.

Patch embeddings of selected patches can then be combined with regional embeddings of those regions that include selected patches to form a global embedding.

For example, the global embedding can be generated by first combining (e.g., concatenating) each regional embedding with the patch embeddings of selected patches comprised by the respective region. In a further step, the combined embeddings can be aggregated into a single embedding, the global embedding.

If multiple patches are selected in a region, then the patch embeddings of these patches can first be combined into a single feature vector, and then this feature vector can be combined (e.g., concatenated) with the regional embedding representing the region.

In a preferred embodiment, the patches are selected such that an equal number of selected patches are located in each region where the selected patches are located. Optionally, for each selected patch, a number of neighbor patches is selected, and a feature vector is generated based on the selected patch and its neighbor patches. Preferably, an attention mechanism is used to combine the feature vectors of a selected patch and its neighbor patches, such as described in: A.V. Konstantinov et al.: Multi-Attention Multiple-instance Learning, arXiv:2112.06071v1 [cs.LG]. The feature vector representing a selected patch and optionally its neighbor patches can then be combined with the regional embedding representing the region where the selected patch is located, e.g., by concatenation.

It is also possible to include further information about a training image in the generation of the global embedding. It is possible, for example, to aggregate all regional embeddings of the training image into a single feature vector and combine this feature vector with one or more feature vectors representing regions together with selected patches comprised by the regions. **In** this way, aggregated information about the whole image is included in the generation of the global embedding.

The generation of the global embedding is a process performed by the first machine learning model and, therefore, a trainable process.

Fig. 3 shows schematically and exemplarily a preferred method for generating a global embedding representing a (training) image.

Fig. 3 (a) shows the image I already shown in Fig. 2. It is divided into a number (16) of regions and a number (1024) of patches. In Fig. 3 (a), one patch P and one region R each are marked with an arrow.

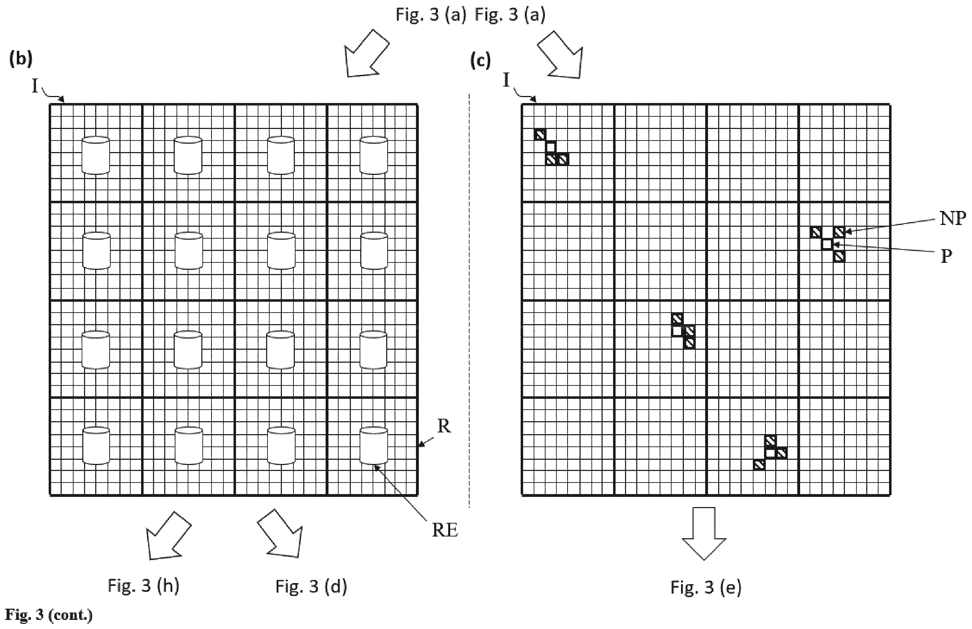

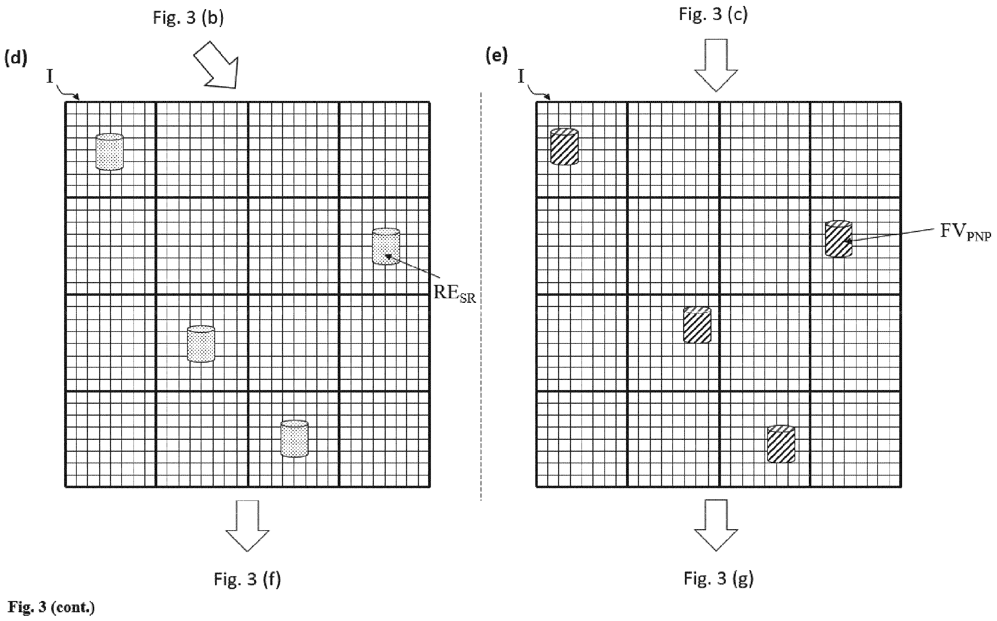

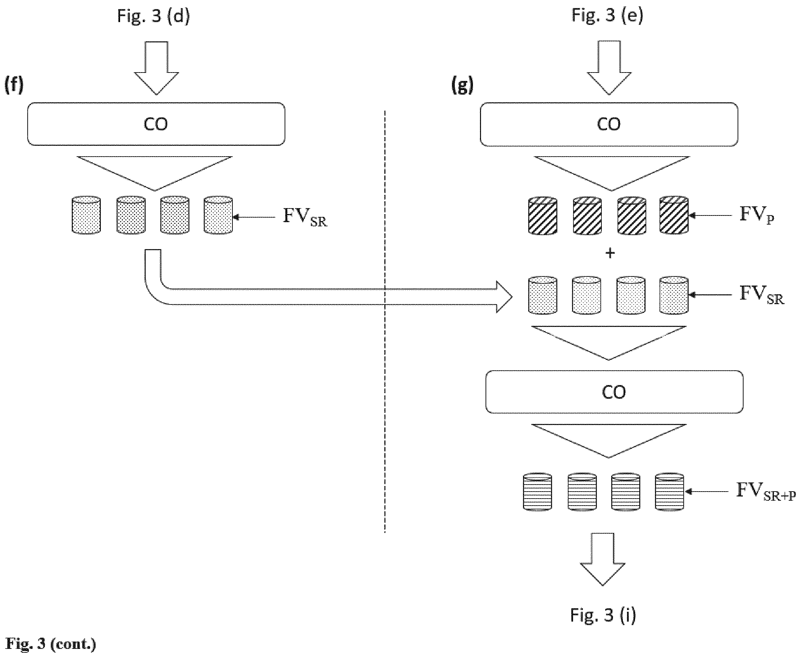

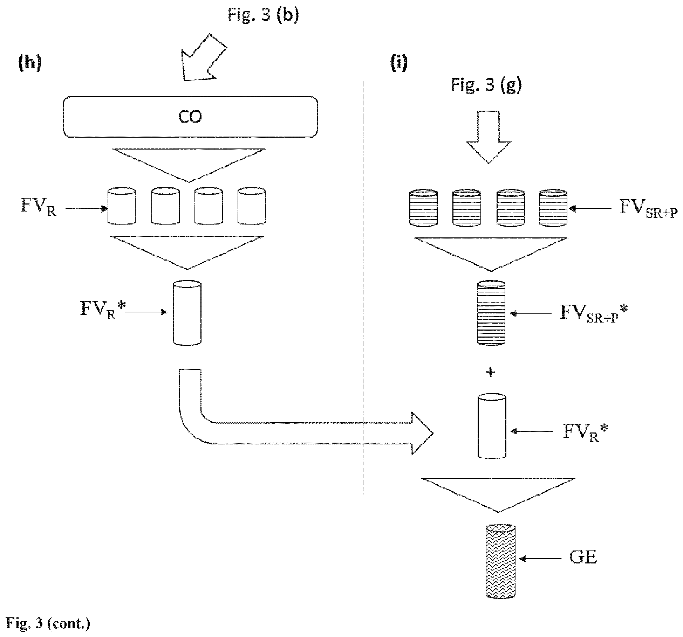

Such a (training) image I is fed to the first machine learning model to be trained and to the pre-trained second machine learning model. For illustration purposes, the processes depicted in Fig. 3 (b) to Fig. 3 (i) are separated by a dashed line; the processes performed by the first machine learning model are shown to the right of the dashed line (and are depicted in Fig. 3 (c), Fig. 3 (e), Fig. 3 (g) and Fig. 3 (i)), and the processes performed by the second model are shown to the left of the dashed line (and are depicted in Fig. 3 (b), Fig. 3 (d), Fig. 3 (f) and Fig. 3 (h)). Thus, the parameters underlying the processes on the right side of the dashed line are trainable and are learned by the first machine learning model. The parameters underlying the processes on the left side of the dashed line are fixed and not learned by the first machine learning model.

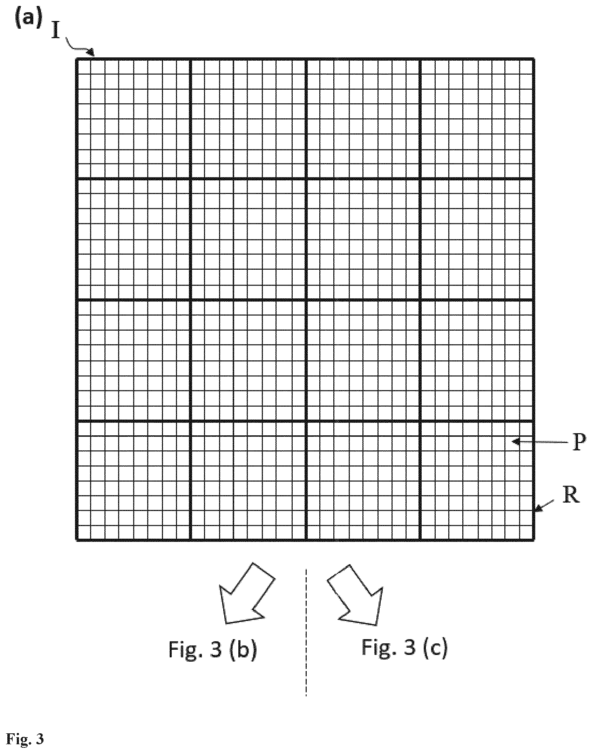

It should be noted that Fig. 3 shows only one embodiment of the present disclosure; it is possible that processes executed by the second machine learning model in Fig. 3 are executed in whole or in part by the first machine learning model.

In Fig. 3 (b) it is shown that for each region of the image I, a regional embedding is generated to represent the region. As described above, each regional embedding is generated based on patch embeddings of patches comprises by the region. In Fig. 3 (b), the patch embeddings and regional embedding are generated using the trained second machine learning model. In Fig. 3 (b), the regional embeddings are represented by cylinders; one region R and one regional embedding RE are marked with arrows.

Fig. 3 (c) shows that four patches are selected. In addition, for each selected patch, a number (3) of neighbor patches are selected. In Fig. 3 (c), one selected patch P and one neighbor patch NP are marked with arrows. For each selected patch along with its neighbor patches, a feature vector can be generated to represent the selected patch along with its neighbors. The feature vector can be generated based on the patch embedding of the selected patch and patch embeddings of its neighbor patches, for example, using an attention mechanism as described in A.V. Konstantinov et al.: Multi-Attention Multiple-instance Learning, arXiv:2112.06071v1 [cs.LG]. Fig. 3 (e) shows the corresponding feature vectors; one feature vector FV_{PNP} is marked with an arrow.

Each selected patch in Fig. 3 (c) is located in a different region. Each region in which a selected patch is located is characterized by a regional embedding. These regional embeddings are highlighted by hatching in Fig. 3 (d). One of the regional embeddings, RE_{SR}, is marked by an arrow.

Figs. 3 (d) and 3 (e) can be considered as feature maps. For dimension reduction and/or elimination of location dependencies, the feature maps can be subjected to a transformation, i.e., they can be mapped to feature vectors of smaller dimension. For example, the feature maps shown in Figs. 3 (d) and 3 (e) can be subjected to a convolution operation CO, e.g., a 1×1 filter can be used to create a linear projection of a stack of feature maps. This is schematically shown in Fig. 3 (f) and Fig. 3 (g). The resulting feature vectors are denoted in Fig. 3 (f) and Fig. 3 (g) as FV_{SR} and FV_{P}.

The feature vectors FV_{SR} and FV_{P} are combined in Fig. 3 (g). This can be done, e.g., by concatenation. The resulting feature vector can again be subjected to a dimension reduction, e.g., by 1x1 convolution CO.

As with the feature map shown in Fig. 3 (d), the feature map shown in Fig. 3 (b) can also be subjected to dimension reduction. This is shown in Fig. 3 (h), where again a 1x1 convolution operation CO is performed. The resulting feature vectors FV_{R} can be combined into a single feature vector FV_{R}*. The combination can be done using an attention mechanism (see, e.g., M. Ilse et al.: Attention-based Deep Multiple-instance Learning, arXiv:1802.04712v4 [cs.LG]).

In Fig. 3 (i) it is shown that the vectors FV_{SR+P} are combined into a single feature vector FV_{SR+P}*. The combination can be done using an attention mechanism (see, e.g., M. Ilse et al.: Attention-based Deep Multiple-instance Learning, arXiv:1802.04712v4 [cs.LG]). Finally, feature vectors FV_{R}* and FV_{SR+P}* are combined into the global embedding GE, e.g., by concatenation.

The global embedding can be used for classification. Therefore, in a further step, the global embedding is fed to a classifier. The classifier is configured to assign the global embedding to one of the at least two classes. Preferably, the classifier is part of the first machine learning model. The classifier can be, e.g., an artificial neural network. Examples of preferred classifiers can be found, e.g., in J. Hoehne et al.: Detecting genetic alterations in BRAF and NTRK as oncogenic drivers in digital pathology images: towards model generalization within and across multiple thyroid cohorts, Proceedings of Machine Learning Research 156, 2021, pages 1-12; M. Y. Lu et al.: AI-based pathology predicts origins for cancers of unknown primary, Nature, 594(7861):106-110, 2021; M. Ilse et al.: Attention-based deep multiple-instance learning, International conference on machine learning, pages 2127-2136, PMLR, 2018; M. Ilse et al.: Deep multiple-instance learning for digital histopathology, Handbook of Medical Image Computing and Computer Assisted Intervention, pages 521-546. Elsevier, 2020.

The classification result provided by the classifier can be analyzed. The class to which the global embedding is assigned can be compared with the class to which the training image is assigned.

A loss function can be used for quantifying the deviation between the output (predicted class) and the target (ground truth class).

Based on the computed loss, parameters of the first machine learning model can be modified to minimize the loss.

Examples of loss functions can be found, e.g., in J. Hoehne et al.: Detecting genetic alterations in BRAF and NTRK as oncogenic drivers in digital pathology images: towards model generalization within and across multiple thyroid cohorts, Proceedings of Machine Learning Research 156, 2021, pages 1-12; A. V. Konstantinov et al.: Multi-Attention Multiple-instance Learning, arXiv:2112.06071v1 [cs.LG]; M. Ilse et al.: Attention-based Deep Multiple-instance Learning, arXiv:1802.04712v4 [cs.LG]).

The first machine learning model can be trained on a plurality of training images until the first machine learning model reaches a defined accuracy in prediction.

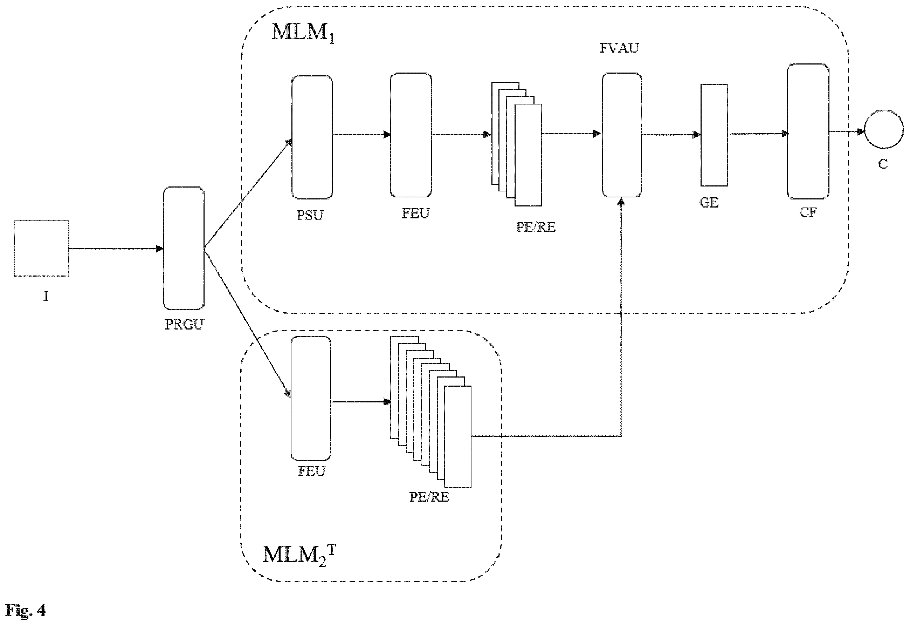

Fig. 4 shows schematically by way of example, the interaction of the first machine learning model and the second machine learning model. In a first step, a (training) image I is inputted into a patch and region generation unit PRGU. The patch and region generation unit PRGU is configured to generate a plurality of patches and a multitude of regions based on the (training) image. The patch and region generation unit PRGU can be part of the first machine learning model MLM₁, of the second machine learning model MLM₂^{T}, or a separate unit from them. The (training) image I, divided into regions and patches, is then fed to the first machine learning model MLM₁ and the second machine learning model MLM₂^{T}. The second machine learning model MLM₂^{T} comprises a feature extraction unit FEU which is configured and trained to generate patch embeddings and/or regional embeddings PE/RE based on the patches and/or regions of the (training) image I. The first machine learning model MLM₁ comprises a patch selection unit PSU which is configured to select a number of patches and optionally neighbor patches in the (training) image I. The first machine learning model MLM₁ further comprises a feature extraction unit FEU which is configured to generate patch embeddings for and on the basis of the selected patches and optionally neighbor patches. The first machine learning model MLM₁ further comprises a feature vector aggregation unit FVAU which is configured to aggregate patch embeddings and regional embeddings PE/RE generated by the feature extraction unit FEU of the first machine learning model MLM₁ and by the feature extraction unit FEU of the second machine learning model MLM₂^{T} and to generate a global embedding GE. The first machine learning model MLM₁ further comprises a classifier CF which is configured to assign the global embedding GE to one of at least two classes C.

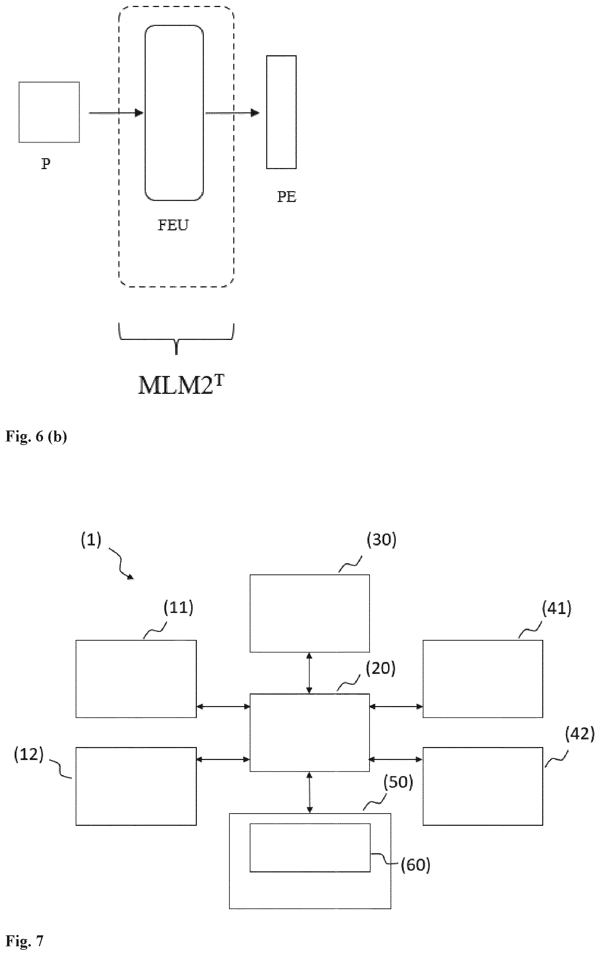

The term "unit" as used in this disclosure is not intended to imply that there is necessarily a separate unit performing the functions described. Rather, the term is intended to be understood to mean that computation means are present which perform the appropriate functions. These computation means are typically one or more processors configured to perform corresponding operations. Details are described below with reference to Fig. 7.

As described above, the first machine learning model as well as the second machine learning model comprises a feature extraction unit which is configured to receive a patch and generate a feature vector (a patch embedding) on the basis of the patch.

As used herein, "feature extraction" is usually a process of dimensionality reduction by which an initial set of data (e.g., a patch) is reduced to more manageable groups for processing. Feature extraction starts from the initial set of data and builds derived values (features) intended to be informative and non-redundant. A characteristic of these large data sets is a large number of variables that require a lot of computing resources to process. Feature extraction is the name for methods that select and/or combine variables into features, effectively reducing the amount of data that must be processed, while still accurately and completely describing the original data set.

In a preferred embodiment, an artificial neural network is used for feature extraction (hereinafter also referred to as feature extraction network/unit). An artificial neural network (ANN) is a biologically inspired computational model. An ANN usually comprises at least three layers of processing elements: a first layer with input neurons (nodes), a k^{th} layer with at least one output neuron (node), and k-2 inner (hidden) layers, where k is an integer greater than 2.

In such a network, the input neurons serve to receive the input data (e.g., a patch). The output neurons serve to output data (e.g., a feature vector). The processing elements of the layers are interconnected in a predetermined pattern with predetermined connection weights therebetween. Each network node can represent a calculation of the weighted sum of inputs from prior nodes and a non-linear output function. The combined calculation of the network nodes relates the inputs to the outputs.

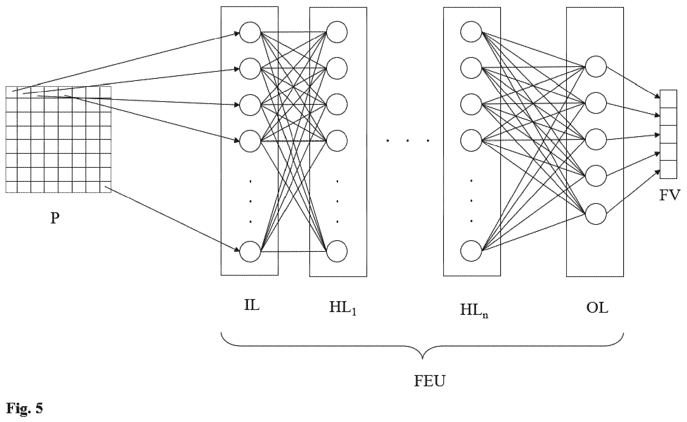

Fig. 5 shows schematically by way of example a feature extraction unit/network. The feature extraction unit/network FEU comprises an input layer IL, a number n of hidden layers HLₗ to HLₙ and an output layer. The input neurons of the input layer IL serve to receive a patch P. Usually, there is at least one input neuron for each pixel/voxel of the patch P. The output neurons serve to output a feature vector FV (patch embedding).

The neurons of the input layer IL and the hidden layer HLₗ are connected by connection lines having a connection weight, and the neurons of the hidden layer HLₙ and the output layer are also connected by connection lines with a connection weight. Similarly, the neurons of the hidden layers are connected to the neurons of neighboring hidden layers in a predetermined manner (not shown in Fig. 5). The connection weights can be learned through training.

In a preferred embodiment of the present disclosure, one or more feature extraction units used for feature extraction are or comprise a convolutional neural network (CNN).

A CNN is a class of deep neural networks that comprises an input layer with input neurons, an output layer with at least one output neuron, as well as multiple hidden layers between the input layer and the output layer. The hidden layers of a CNN typically comprise filters (convolutional layer) and aggregation layers (pooling layer) which are repeated alternately and, at the end, one layer or multiple layers of completely connected neurons (dense/fully connected layer(s)).

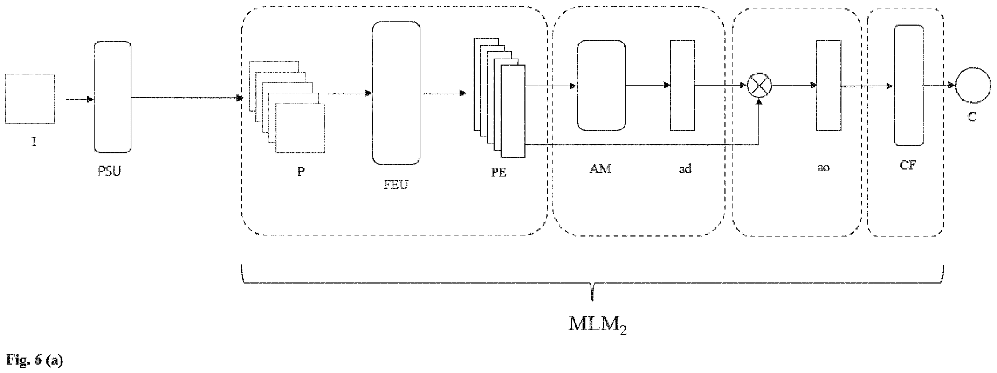

As described above, the second machine learning model is trained to generate a patch embedding based on a patch of an image. There are several possibilities to configure and train a machine learning model to generate a patch embedding based on a patch of an image. One example is depicted in Fig. 6 (a) and Fig. 6 (b) and is now explained in more detail with reference to said figures. Fig. 6 (a) shows schematically one example of training the second machine learning model MLM₂; Fig. 6 (b) shows the trained second machine learning model MLM₂^{T}.

The second machine learning model MLM₂ is trained using a plurality of training images. In Fig. 6 (a), only one training image I is shown. Each training image is labeled, i.e., it is assigned to one of at least two classes. The class to which the training image is assigned is also referred to as ground truth class. The machine learning model MLM₂ depicted in Fig. 6 (a) is configured to receive a number of patches P resulting from the training image I and to assign the training image to one of the at least two classes (predicted class). The machine learning model MLM₂ comprises a feature extraction unit FEU which is configured to generate a patch embedding PE for each received patch. The patch embeddings PE are combined to a joint feature vector using an attention mechanism AM. ad means attention distribution. ao means attention output. The joint feature vector (which is the attention output ao) is assigned to one or the at least two classes by the classifier CF. The predicted class C can be compared with the ground truth class (i.e., the label of the training image). A loss can be calculated based on a difference between the predicted class and the ground truth class. Parameters of the machine learning model can be modified to minimize the loss.

The classes to which the training images are assigned by the machine learning model MLM₂ can be the same classes that the first machine learning model is to learn; however, they can also be other classes. Likewise, the same training images can be used to train the second machine learning model as are used to train the first machine learning model and/or other/different training images.

The feature extraction unit FEU of the trained machine learning model MLM₂^{T} as depicted in Fig. 6 (b) can be used as a pre-trained second machine learning model for the generation of patch embeddings.

Examples of a feature extraction units which can be used as pre-trained second machine learning model are disclosed in J. Hoehne et al.: Detecting genetic alterations in BRAF and NTRK as oncogenic drivers in digital pathology images: towards model generalization within and across multiple thyroid cohorts, Proceedings of Machine Learning Research 156, 2021, pages 1-12; WO2020229152A1.

In the case of the example shown in Fig. 6 (a) and Fig. 6 (b), the classification is based on selected patches. It is possible to include neighboring patches to the selected patches in the classification. This is described in: A.V. Konstantinov et al.: Multi-Attention Multiple-instance Learning, arXiv:2112.06071v1 [cs.LG]. The machine learning model described in the publication of A.V. Konstantinov *et al.* can also be used as a pre-trained second machine learning model for feature extraction and feature vector generation.

It should be noted that the second machine learning model need not be trained as a classification model. It can also be trained to perform another task, such as regression, image quality enhancement, segmentation, reconstruction, or any other task or a combination of tasks. In a preferred embodiment, the second machine learning model is trained in an unsupervised representation learning process. Augmentation techniques can be used to extend the training dataset (see e.g.: J. Dippel et al.: Towards Fine-grained Visual Representations by Combining Contrastive Learning with Image Reconstruction and Attention-weighted Pooling, https://doi.org/10.48550/arXiv.2104.04323).

Thus, the pre-trained second machine learning model can also be an encoder of an autoencoder, for example. An autoencoder is usually used to learn efficient data encodings in an unsupervised manner. In general, the aim of an autoencoder is to learn a representation (encoding) for a set of data, typically for dimensionality reduction, by training the machine learning model to ignore "noise". Along with the reduction side (encoder), a reconstructing side (decoder) is learnt, where the autoencoder tries to generate from the reduced encoding a representation as close as possible to its original input.

A key feature of an autoencoder is an information bottleneck between the encoder and the decoder. This bottleneck, a continuous fixed-length vector, causes the machine learning model to learn a compressed representation that captures the most statistically salient information in the data.

Examples of encoders which can be used as pre-trained second machine learning model for feature extraction and feature vector generation are disclosed in: J. Dippel et al: Towards Fine-grained Visual Representations by Combining Contrastive Learning with Image Reconstruction and Attention-weighted Pooling, 2021, arXiv:2104.04323v2 [cs.CV]; O. Ronneberger et al.: U-Net: Convolutional Networks for Biomedical Image Segmentation, arXiv:1505.04597 [cs.CV].

The pre-trained second machine learning model can be used to generate patch embeddings and/or regional embeddings for training images. The embeddings can be stored (e.g., in a data memory) and used (e.g., at a later time) for training the first machine learning model. So, the embeddings only have to be calculated once.

The pre-trained second machine learning model can also be used as feature extraction unit of the first machine learning model. As shown in Fig. 4 the first machine learning model comprises a feature extraction unit. The pre-trained feature extraction model of the second machine learning model can be taken here as a starting point for the feature extraction in the first machine learning model. However, as described above, the parameters of the first machine learning model are not fixed but trainable, so that the parameters of the feature extraction unit can be modified during training. In other words: the feature extraction unit of the first machine learning model can be initialized with the pretrained weights of the feature extraction unit of the second machine learning model.

It is also possible to replace the feature extraction unit of the pre-trained second machine learning model by the feature extraction unit of the trained first machine learning model; for example, after a number of training cycles and/or at the end of the training of the first machine learning model, the feature extraction unit of second machine learning model can be replaced by the feature extraction unit of the first machine learning model.

Besides the pre-trained second machine learning model, one or more other pre-trained machine learning models (a third, fourth, fifth, ...) can also be used. Each of such machine learning models can be configured and trained to generate embedding representing different regions and/or aspects of an image.

For example, the one additional machine learning model or the multiple additional machine learning models may operate at different size scales (sizes of regions within the image). The embeddings generated by the one additional model or the multiple additional models are then merged with the regional embeddings of the second machine learning model and the patch embeddings of the first machine learning model into one global embedding.

The trained (first and second and optionally one or more additional) machine learning model(s) can be stored in a data storage, transmitted to another computer system, or used to classify one or more new images. The term "new" means that the corresponding image was not used during training.

The machine learning model can be trained to perform various tasks. Accordingly, a trained machine learning model can be used for various purposes. In a preferred embodiment, the machine learning model of the present disclosure is trained and the trained machine learning model is uses to detect, identify, and/or characterize tumor types and/or gene mutations in tissues.

The machine learning model can be trained and the trained machine learning model can be used to recognize a specific gene mutation and/or a specific tumor type, or to recognize multiple gene mutations and/or a specific tumor type.

The machine learning model can be trained and the trained machine learning model can be used to characterize the type or types of cancer a patient or subject has.

The machine learning model can be trained and the trained machine learning model can be used to select one or more effective therapies for the patient.

The machine learning model can be trained and the trained machine learning model can be used to determine how a patient is responding over time to a treatment and, if necessary, to select a new therapy or therapies for the patient as necessary.

Correctly characterizing the type or types of cancer a patient has and, potentially, selecting one or more effective therapies for the patient can be crucial for the survival and overall wellbeing of that patient.

The machine learning model can be trained and the trained machine learning model can be used to determine whether a patient should be included or excluded from participating in a clinical trial.

The machine learning model can be trained and the trained machine learning model can be used to classify images of tumor tissue in one or more of the following classes: inflamed, non-inflamed, vascularized, non-vascularized, fibroblast-enriched, non-fibroblast-enriched (such classes are defined, e.g., in EP3639169A1).

The machine learning model can be trained and the trained machine learning model can be used to identify differentially expressed genes in a sample from a subject (e.g., a patient) having a cancer (e.g., a tumor).

The machine learning model can be trained and the trained machine learning model can be used to identify genes that are mutated in a sample from a subject having a cancer (e.g., a tumor).

The machine learning model can be trained and the trained machine learning model can be used to identify a cancer (e.g., a tumor) as a specific subtype of cancer selected.

Such uses may be useful for clinical purposes including, for example, selecting a treatment, monitoring cancer progression, assessing the efficacy of a treatment against a cancer, evaluating suitability of a patient for participating in a clinical trial, or determining a course of treatment for a subject (e.g., a patient).

The trained machine learning model may also be used for non-clinical purposes including (as a non-limiting example) research purposes such as, e.g., studying the mechanism of cancer development and/or biological pathways and/or biological processes involved in cancer, and developing new therapies for cancer based on such studies.

The machine learning model of the present disclosure is trained based on images and it generates predictions based on images. The images usually show the tissue of one or more subjects. The images can be created from tissue samples of a subject. The subject is usually a human, but may also be any mammal, including mice, rabbits, dogs, and monkeys.

The tissue sample may be any sample from a subject known or suspected of having cancerous cells or pre-cancerous cells.

The tissue sample may be from any source in the subject's body including, but not limited to, skin (including portions of the epidermis, dermis, and/or hypodermis), bone, bone marrow, brain, thymus, spleen, small intestine, appendix, colon, rectum, liver, gall bladder, pancreas, kidney, lung, ureter, bladder, urethra, uterus, ovary, cervix, scrotum, penis, prostate.

The tissue sample may be a piece of tissue, or some or all of an organ.

The tissue sample may be a cancerous tissue or organ or a tissue or organ suspected of having one or more cancerous cells.

The tissue sample may be from a healthy (e.g. non-cancerous) tissue or organ.

The tissue sample may include both healthy and cancerous cells and/or tissue.

In certain embodiments, one sample has been taken from a subject for analysis. In some embodiments, more than one (e.g., 2, 3, 4, 5, 6, 7, 8, 9, 10, 11, 12, 13, 14, 15, 16, 17, 18, 19, 20, or more) samples may have been taken from a subject for analysis.

In some embodiments, one sample from a subject will be analyzed. In certain embodiments, more than one (e.g., 2, 3, 4, 5, 6, 7, 8, 9, 10, 11, 12, 13, 14, 15, 16, 17, 18, 19, 20, or more) samples may be analyzed. If more than one sample from a subject is analyzed, the samples may have been procured at the same time (e.g., more than one sample may be taken in the same procedure), or the samples may have been taken at different times (e.g., during a different procedure including a procedure 1, 2, 3, 4, 5, 6, 7, 8, 9, 10 days; 1, 2, 3, 4, 5, 6, 7, 8, 9, 10 weeks; 1, 2, 3, 4, 5, 6, 7, 8, 9, 10 months, 1, 2, 3, 4, 5, 6, 7, 8, 9, 10 years, or 1, 2, 3, 4, 5, 6, 7, 8, 9, 10 decades after a first procedure). A second or subsequent sample may be taken or obtained from the same region (e.g., from the same tumor or area of tissue) or a different region (including, e.g. a different tumor). A second or subsequent sample may be taken or obtained from the subject after one or more treatments and may be taken from the same region or a different region. As a non-limiting example, the second or subsequent sample may be useful in determining whether the cancer in each sample has different characteristics (e.g., in the case of samples taken from two physically separate tumors in a patient) or whether the cancer has responded to one or more treatments (e.g., in the case of two or more samples from the same tumor prior to and subsequent to a treatment).

Any of the samples described herein may have been obtained from the subject using any known technique. In some embodiments, the sample may have been obtained from a surgical procedure (e.g., laparoscopic surgery, microscopically controlled surgery, or endoscopy), bone marrow biopsy, punch biopsy, endoscopic biopsy, or needle biopsy (e.g., a fine-needle aspiration, core needle biopsy, vacuum-assisted biopsy, or image-guided biopsy).

Detection, identification, and/or characterization of tumor types may be applied to any cancer and any tumor. Exemplary cancers include, but are not limited to, adrenocortical carcinoma, bladder urothelial carcinoma, breast invasive carcinoma, cervical squamous cell carcinoma, endocervical adenocarcinoma, colon adenocarcinoma, esophageal carcinoma, kidney renal clear cell carcinoma, kidney renal papillary cell carcinoma, liver hepatocellular carcinoma, lung adenocarcinoma, lung squamous cell carcinoma, ovarian serous cystadenocarcinoma, pancreatic adenocarcinoma, prostate adenocarcinoma, rectal adenocarcinoma, skin cutaneous melanoma, stomach adenocarcinoma, thyroid carcinoma, uterine corpus endometrial carcinoma, and cholangiocarcinoma.

The machine learning model can be trained and the trained machine learning model can be used to detect, identify and/or characterize gene mutations in tissue samples.

Examples of genes related to proliferation of cancer or response rates of molecular target drugs include HER2, TOP2A, HER3, EGFR, P53, and MET. Examples of tyrosine kinase related genes include ALK, FLT3, AXL, FLT4 (VEGFR3, DDR1, FMS(CSF1R), DDR2, EGFR(ERBB1), HER4(ERBB4), EML4-ALK, IGF1R, EPHA1, INSR, EPHA2, IRR(INSRR), EPHA3, KIT, EPHA4, LTK, EPHA5, MER(MERTK), EPHA6, MET, EPHA7, MUSK, EPHA8, NPM1-ALK, EPHB1, PDGFRα(PDGFRA), EPHB2, PDGFRβ(PDGFRB)EPHB3, RET, EPHB4, RON(MST1R), FGFR1, ROS(ROS1), FGFR2, TIE2(TEK), FGFR3, TRKA(NTRK1), FGFR4, TRKB(NTRK2), FLT1(VEGFR1), and TRKC(NTRK3). Examples of breast cancer related genes include ATM, BRCA1, BRCA2, BRCA3, CCND1, E-Cadherin, ERBB2, ETV6, FGFR1, HRAS, KRAS, NRAS, NTRK3, p53, and PTEN. Examples of genes related to carcinoid tumors include BCL2, BRD4, CCND1, CDKN1A, CDKN2A, CTNNB1, HES1, MAP2, MEN1, NF1, NOTCH1, NUT, RAF, SDHD, and VEGFA. Examples of colorectal cancer related genes include APC, MSH6, AXIN2, MYH, BMPR1A, p53, DCC, PMS2, KRAS2 (or Ki-ras), PTEN, MLH1, SMAD4, MSH2, STK11, and MSH6. Examples of lung cancer related genes include ALK, PTEN, CCND1, RASSF1A, CDKN2A, RB1, EGFR, RET, EML4, ROS1, KRAS2, TP53, and MYC. Examples of liver cancer related genes include Axin1, MALAT1, b-catenin, p16 INK4A, c-ERBB-2, p53, CTNNB1, RB1, Cyclin D1, SMAD2, EGFR, SMAD4, IGFR2, TCF1, and KRAS. Examples of kidney cancer related genes include Alpha, PRCC, ASPSCR1, PSF, CLTC, TFE3, p54nrb/NONO, and TFEB. Examples of thyroid cancer related genes include AKAP10, NTRK1, AKAP9, RET, BRAF, TFG, ELE1, TPM3, H4/D10S170, and TPR. Examples of ovarian cancer related genes include AKT2, MDM2, BCL2, MYC, BRCA1, NCOA4, CDKN2A, p53, ERBB2, PIK3CA, GATA4, RB, HRAS, RET, KRAS, and RNASET2. Examples of prostate cancer related genes include AR, KLK3, BRCA2, MYC, CDKN1B, NKX3.1, EZH2, p53, GSTP1, and PTEN. Examples of bone tumor related genes include CDH11, COL12A1, CNBP, OMD, COL1A1, THRAP3, COL4A5, and USP6.

In a preferred embodiment, the machine learning model is trained and used for classification of tissue types on the basis of whole slide images. Preferably, the machine learning model is trained and used for identification of gene mutations, such as BRAF mutations and/or NTRK fusions, as described in WO2020229152A1 and/or J. Hoehne et al.: Detecting genetic alterations in BRAF and NTRK as oncogenic drivers in digital pathology images: towards model generalization within and across multiple thyroid cohorts, Proceedings of Machine Learning Research 156, 2021, pages 1-12.

For example, the machine learning model can be trained to detect signs of the presence of oncogenic drivers in patient tissue images stained with hematoxylin and eosin.

F. Penault-Llorca et al. describe a testing algorithm for identification of patients with TRK fusion cancer (see J. Clin. Pathol., 2019, 72, 460-467). The algorithm comprises immunohistochemistry (IHC) studies, fluorescence in situ hybridization (FISH) and next-generation sequencing.

Immunohistochemistry provides a routine method to detect protein expression of NTRK genes. However, performing immunohistochemistry requires additional tissue section(s) and time to proceed and interprete (following hematoxylin and eosin initial staining based on which tumor diagnosis is performed), skills and the correlation between protein expression and gene fusion status is not trivial. Interpretation of IHC results requires the skills of a trained and certified medical professional pathologist.

Similar practical challenges hold true for other molecular assays such as FISH.

Next-generation sequencing provides a precise method to detect NTRK gene fusions. However, performing gene analyses for each patient is expensive, tissue consuming (not always feasible when available tissue specimen is minimal, as in diagnostic biopsies), not universally available in various geographic locations or diagnostic laboratories/healthcare institutions and, due to the low incidence of NTRK oncogenic fusions, inefficient.

There is therefore a need for a comparatively rapid and inexpensive method to detect signs of the presence of specific tumors.

It is proposed to train a machine learning model as described in this disclosure to assign histopathological images of tissues from patients to one of at least two classes, where one class comprises images showing tissue in which a specific gene mutation is present, such as NTRK or BRAF.

It is proposed to use the trained machine learning model as a preliminary test. Patients in whom the specific mutation can be detected are then subjected to a standard examination such as IHC, FISH and/or next-generation sequencing to verify the finding.

Additional studies may also be considered, such as other forms of medical imaging (CT scans, MRI, etc.) that can be co-assessed using AI to generate multimodal biomarkers/characteristics for diagnostic purposes.

The machine *learning* model of the present disclosure can, e.g., be used to
a) detect NTRK fusion events in one or more indications,
b) detect NTRK fusion events in other indications than in those being trained on (i.e., an algorithm trained on thyroid data sets is useful in lung cancer data sets),
c) detect NTRK fusion events involving other TRK family members (i.e., an algorithm trained on NTRK1, NTRK3 fusions is useful to predict also NTRK2 fusions),
d) detect NTRK fusion events involving other fusion partners (i.e., an algorithm trained on LMNA-fusion data sets is useful also in TPM3-fusion data sets),
e) discover novel fusion partners (i.e., an algorithm trained on known fusion events might predict a fusion in a new data set which is then confirmed via molecular assay to involve a not yet described fusion partner of a NTRK family member),
f) catalyze the diagnostic workflow and clinical management of patients offering a rapid, tissue-sparing, low-cost method to indicate the presence of NTRK-fusions (and ultimately others) and identifying patients that merit further downstream molecular profiling so as to provide precision medicines targeting specific molecular aberrations (e.g. NTRK-fusion inhibitors),
g) identify specific genetic aberrations based on histological specimen can additionally be used to confirm/exclude or re-label certain tumor diagnosis, in cases the presence or absence of this/these alterations(s) is pathognomonic of specific tumors.

Identification of specific genetic aberrations based on histological specimen can additionally be used to confirm/exclude or re-label certain tumor diagnosis, in cases the presence or absence of this/these alterations(s) is pathognomonic of specific tumors.

Histopathological images used for training and prediction of the machine learning model can be obtained from patients by biopsy or surgical resection specimens.

In a preferred embodiment, a histopathological image is a microscopic image of tumor tissue of a human patient. The magnification factor is preferably in the range of 10 to 60, more preferably in the range of 20 to 40, whereas a magnification factor of, e.g., "20" means that a distance of 0.05 mm in the tumor tissue corresponds to a distance of 1 mm in the image (0.05 mm x 20 = 1 mm).

In a preferred embodiment, the histopathological image is a whole-slide image.

In a preferred embodiment, the histopathological image is an image of a stained tumor tissue sample. One or more dyes can be used to create the stained images. Preferred dyes are hematoxylin and eosin.

Methods for creating histopathological images, in particular stained whole-slide microscopy images, are extensively described in scientific literature and textbooks (see e.g. S. K. Suvarna et al.: Bancroft's Theory and Practice of Histological Techniques, 8th Ed., Elsevier 2019, ISBN 978-0-7020-6864-5; A. F. Frangi et al.: Medical Image Computing and Computer Assisted Intervention - MICCAI 2018, 21st International Conference Granada, Spain, 2018 Proceedings, Part II, ISBN 978-030-00933-5; L.C. Junqueira et al.: Histologie, Springer 2001, ISBN: 978-354-041858-0; N. Coudray et al.: Classification and mutation prediction from non-small cell lung cancer histopathology images using deep learning, Nature Medicine, Vol. 24, 2018, pages 1559-1567).

The machine learning model can also be configured to generate a probability value, the probability value indicating the probability of a patient suffering from cancer, e.g., caused by an NTRK oncogenic fusion. The probability value can be outputted to a user and/or stored in a database. The probability value can be a real number in the range from 0 to 1, whereas a probability value of 0 usually means that it is impossible that the cancer is caused by an NTRK oncogenic fusion, and a probability value of 1 usually means that there is no doubt that the cancer is caused by an NTRK oncogenic fusion. The probability value can also be expressed by a percentage.

In a preferred embodiment of the present invention, the probability value is compared with a predefined threshold value. In the event the probability value is lower than the threshold value, the probability that the patient suffers from cancer caused by an NTRK oncogenic fusion is low; treating the patient with a Trk inhibitor is not indicated; further investigations are required in order to determine the cause of cancer. In the event the probability value equals the threshold value or is greater than the threshold value, it is reasonable to assume that the cancer is caused by an NTRK oncogenic fusion; the treatment of the patient with a Trk inhibitor can be indicated; further investigations to verify the assumption can be initiated (e.g., performing a genetic analysis of the tumor tissue).

The threshold value can be a value between 0.5 and 0.99999999999, e.g. 0.8 (80%) or 0.81 (81 %) or 0.82 (82% ) or 0.83 (83%) or 0.84 (84%) or 0.85 (85%) or 0.86 (86%) or 0.87 (87 %) or 0.88 (88%) or 0.89 (89%) or 0.9 (90%) or 0.91 (91 %) or 0.92 (92% ) or 0.93 (93%) or 0.94 (94%) or 0.95 (95%) or 0.96 (96%) or 0.97 (97 %) or 0.98 (98%) or 0.99 (99%) or any other value (percentage). The threshold value can be determined by a medical expert.

Besides a histopathological image, additional patient data can also be included in the classification. Additional patient data can be, e.g., anatomic or physiology data of the patient, such as information about patient's height and weight, gender, age, vital parameters (such as blood pressure, breathing frequency and heart rate), tumor grades, ICD-9 classification, oxygenation of tumor, degree of metastasis of tumor, blood count value tumor indicator value like PA value, information about the tissue the histopathological image is created from (e.g. tissue type, organ), further symptoms, medical history etc. Also, the pathology report of the histopathological images can be used for classification, using text mining approaches. Also, a next generation sequencing raw data set which does not cover the TRK genes' sequences can be used for classification.

The operations in accordance with the teachings herein may be performed by at least one computer specially constructed for the desired purposes or general purpose computer specially configured for the desired purpose by at least one computer program stored in a typically non-transitory computer readable storage medium.

The term "non-transitory" is used herein to exclude transitory, propagating signals or waves, but to otherwise include any volatile or non-volatile computer memory technology suitable to the application.

The term "computer" should be broadly construed to cover any kind of electronic device with data processing capabilities, including, by way of non-limiting example, personal computers, servers, embedded cores, computing system, communication devices, processors (e.g., digital signal processor (DSP)), microcontrollers, field programmable gate array (FPGA), application specific integrated circuit (ASIC), etc.) and other electronic computing devices.

The term "process" as used above is intended to include any type of computation or manipulation or transformation of data represented as physical, e.g., electronic, phenomena which may occur or reside e.g., within registers and/or memories of at least one computer or processor. The term processor includes a single processing unit or a plurality of distributed or remote such units.

Fig. 7 illustrates a computer system (1) according to some example implementations of the present disclosure in more detail. The computer may include one or more of each of a number of components such as, for example, processing unit (20) connected to a memory (50) (e.g., storage device).

The processing unit (20) may be composed of one or more processors alone or in combination with one or more memories. The processing unit is generally any piece of computer hardware that is capable of processing information such as, for example, data, computer programs and/or other suitable electronic information. The processing unit is composed of a collection of electronic circuits some of which may be packaged as an integrated circuit or multiple interconnected integrated circuits (an integrated circuit at times more commonly referred to as a "chip"). The processing unit may be configured to execute computer programs, which may be stored onboard the processing unit or otherwise stored in the memory (50) of the same or another computer.

The processing unit (20) may be a number of processors, a multi-core processor or some other type of processor, depending on the particular implementation. Further, the processing unit may be implemented using a number of heterogeneous processor systems in which a main processor is present with one or more secondary processors on a single chip. As another illustrative example, the processing unit may be a symmetric multi-processor system containing multiple processors of the same type. In yet another example, the processing unit may be embodied as or otherwise include one or more ASICs, FPGAs or the like. Thus, although the processing unit may be capable of executing a computer program to perform one or more functions, the processing unit of various examples may be capable of performing one or more functions without the aid of a computer program. In either instance, the processing unit may be appropriately programmed to perform functions or operations according to example implementations of the present disclosure.

The memory (50) is generally any piece of computer hardware that is capable of storing information such as, for example, data, computer programs (e.g., computer-readable program code (60)) and/or other suitable information either on a temporary basis and/or a permanent basis. The memory may include volatile and/or non-volatile memory, and may be fixed or removable. Examples of suitable memory include random access memory (RAM), read-only memory (ROM), a hard drive, a flash memory, a thumb drive, a removable computer diskette, an optical disk, a magnetic tape or some combination of the above. Optical disks may include compact disk - read only memory (CD-ROM), compact disk - read/write (CD-R/W), DVD, Blu-ray disk or the like. In various instances, the memory may be referred to as a computer-readable storage medium. The computer-readable storage medium is a non-transitory device capable of storing information, and is distinguishable from computer-readable transmission media such as electronic transitory signals capable of carrying information from one location to another. Computer-readable medium as described herein may generally refer to a computer-readable storage medium or computer-readable transmission medium.

In addition to the memory (50), the processing unit (20) may also be connected to one or more interfaces for displaying, transmitting and/or receiving information. The interfaces may include one or more communications interfaces and/or one or more user interfaces. The communications interface(s) may be configured to transmit and/or receive information, such as to and/or from other computer(s), network(s), database(s) or the like. The communications interface may be configured to transmit and/or receive information by physical (wired) and/or wireless communications links. The communications interface(s) may include interface(s) (41) to connect to a network, such as using technologies such as cellular telephone, Wi-Fi, satellite, cable, digital subscriber line (DSL), fiber optics and the like. In some examples, the communications interface(s) may include one or more short-range communications interfaces (42) configured to connect devices using short-range communications technologies such as NFC, RFID, Bluetooth, Bluetooth LE, ZigBee, infrared (e.g., IrDA) or the like.

The user interfaces may include a display (30). The display may be configured to present or otherwise display information to a user, suitable examples of which include a liquid crystal display (LCD), light-emitting diode display (LED), plasma display panel (PDP) or the like. The user input interface(s) (11) may be wired or wireless, and may be configured to receive information from a user into the computer system (1), such as for processing, storage and/or display. Suitable examples of user input interfaces include a microphone, image or video capture device, keyboard or keypad, joystick, touch-sensitive surface (separate from or integrated into a touchscreen) or the like. In some examples, the user interfaces may include automatic identification and data capture (AIDC) technology (12) for machine-readable information. This may include barcode, radio frequency identification (RFID), magnetic stripes, optical character recognition (OCR), integrated circuit card (ICC), and the like. The user interfaces may further include one or more interfaces for communicating with peripherals such as printers and the like.

As indicated above, program code instructions may be stored in memory, and executed by processing unit that is thereby programmed, to implement functions of the systems, subsystems, tools and their respective elements described herein. As will be appreciated, any suitable program code instructions may be loaded onto a computer or other programmable apparatus from a computer-readable storage medium to produce a particular machine, such that the particular machine becomes a means for implementing the functions specified herein. These program code instructions may also be stored in a computer-readable storage medium that can direct a computer, processing unit or other programmable apparatus to function in a particular manner to thereby generate a particular machine or particular article of manufacture. The instructions stored in the computer-readable storage medium may produce an article of manufacture, where the article of manufacture becomes a means for implementing functions described herein. The program code instructions may be retrieved from a computer-readable storage medium and loaded into a computer, processing unit or other programmable apparatus to configure the computer, processing unit or other programmable apparatus to execute operations to be performed on or by the computer, processing unit or other programmable apparatus.

Retrieval, loading and execution of the program code instructions may be performed sequentially such that one instruction is retrieved, loaded and executed at a time. In some example implementations, retrieval, loading and/or execution may be performed in parallel such that multiple instructions are retrieved, loaded, and/or executed together. Execution of the program code instructions may produce a computer-implemented process such that the instructions executed by the computer, processing circuitry or other programmable apparatus provide operations for implementing functions described herein.

Execution of instructions by processing unit, or storage of instructions in a computer-readable storage medium, supports combinations of operations for performing the specified functions. In this manner, a computer system (1) may include processing unit (20) and a computer-readable storage medium or memory (50) coupled to the processing circuitry, where the processing circuitry is configured to execute computer-readable program code (60) stored in the memory. It will also be understood that one or more functions, and combinations of functions, may be implemented by special purpose hardware-based computer systems and/or processing circuitry which perform the specified functions, or combinations of special purpose hardware and program code instructions.

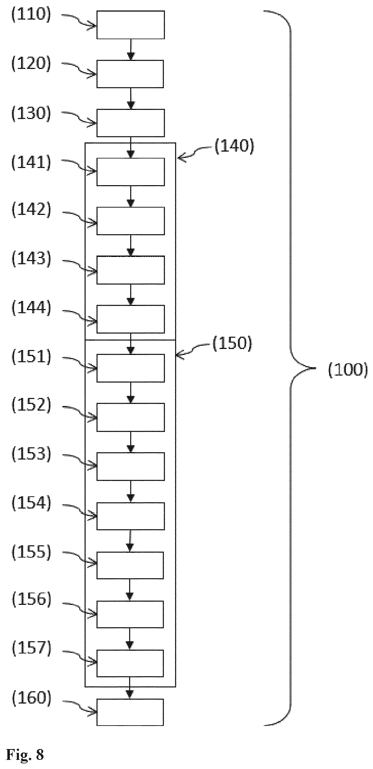

Fig. 8 shows schematically in the form of a flowchart, one embodiment of the method of training the first machine learning model.

The method (100) comprises the step:
(110) providing the first machine learning model, wherein the first machine learning model is configured to receive an image and assign the image to one of two classes,
(120) providing a pre-trained second machine learning model, wherein the second machine learning model is configured and trained to generate a patch embedding based on a patch of an image,
(130) receiving training images, each training image being assigned to one of the at least two classes,
(140) for each training image:
   (141) generating a plurality of patches based on the training image,
   (142) generating a patch embedding for each patch of the plurality of patches using the second machine learning model,
   (143) generating a multitude of regions, each region comprising a number of patches,
   (144) generating a regional embedding for each region based on patch embeddings of patches comprised by the region,
(150) training the first machine learning model using the training images, wherein the training comprises:
   (151) receiving a training image,
   (152) selecting a number of patches from the training image,
   (153) generating a patch embedding for each selected patch,
   (154) generating a global embedding based on the patch embeddings of the selected patches and the regional embeddings of regions comprising the selected patches,
   (155) assigning the global embedding to one of the at least two classes,
   (156) computing a loss based on a difference between the class to which the global embedding is assigned and the class to which the training image is assigned,
   (157) modify parameters of the first machine learning model based on the computed loss,
(160) storing the trained first machine learning model and/or using the trained first machine learning model to classify one or more new images.

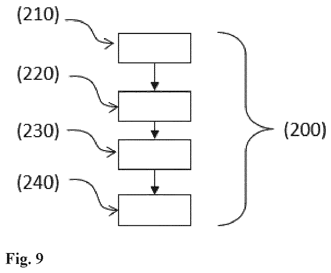

Fig. 9 shows schematically in the form of a flowchart, one embodiment of the method of using the trained first machine learning model for prediction purposes. The method (200) comprises:
(210) providing a trained machine learning model, wherein the trained machine learning model is configured and trained in a multiple instance training method as described herein to assign an image to one of at least two classes,
(220) receiving an image,
(220) inputting the received image into the trained machine learning model,
(230) receiving information about a class the received image is assigned to from the trained machine learning model,
(240) outputting the information.

## Claims

1. A computer-implemented method, the method comprising:
- providing a first machine learning model (MLM₁), wherein the first machine learning model (MLM₁) is configured to receive an image (I) and assign the image (I) to one of two classes (C),
- providing a pre-trained second machine learning model (MLM₂^{T}), wherein the second machine learning model (MLM₂^{T}) is configured and trained to generate a patch embedding (PE) based on a patch (P) of an image (I),
- receiving training images, each training image (I) being assigned to one of the at least two classes (C),
- for each training image (I):
∘ generating a plurality of patches based on the training image (I),
∘ generating a patch embedding (PE) for each patch (P) of the plurality of patches using the second machine learning model (MLM₂^{T}),
∘ generating a multitude of regions, each region (R) comprising a number of patches,
∘ generating a regional embedding (RE) for each region (R) based on patch embeddings of patches comprised by the region,
- training the first machine learning model (MLM₁) using the training images, wherein the training comprises:
∘ receiving a training image (I),
∘ selecting a number of patches from the training image (I),
∘ generating a patch embedding (PE) for each selected patch (P),
∘ generating a global embedding (GE) based on the patch embeddings of the selected patches and the regional embeddings of regions comprising the selected patches,
∘ assigning the global embedding (GE) to one of the at least two classes (C),
∘ computing a loss based on a difference between the class to which the global embedding (GE) is assigned and the class to which the training image (I) is assigned,
∘ modifying parameters of the first machine learning model (MLM₁) based on the computed loss,
- storing the trained first machine learning model (MLM₁), and/or using the trained first machine learning model (MLM₁) and the second machine learning model (MLM₂^{T}) to classify one or more new images,
wherein each region (R) contains a number of patches in the range from 10 to 1000, wherein the regional embeddings are generated by the pre-trained second machine learning model (MLM₂^{T}) in advance of the training of the first machine learning model (MLM₁), wherein the first machine learning model (MLM₁) is trained, and the trained first machine learning model (MLM₁) is used to assign histopathological images of tissues from patients to one of at least two classes (C), wherein one class comprises images showing tissue in which a NTRK or BRAF gene mutation is present.

2. The method according to claim 1, wherein the patch embeddings generated by the second machine learning model (MLM₂^{T}) are generated in advance of the training of the first machine learning model (MLM₁) and stored in a data memory.

3. The method according to any one of claims 1 to 2, further comprising:
- generating, for each training image (I), a feature vector (FV_{R}*) representing all regions of the training image (I) based on the regional embeddings of the training image (I),
- generating the global embedding (GE) based on the patch embeddings of the selected patches and the regional embeddings of regions comprising the selected patches and the feature vector (FV_{R}*) representing all regions of the training image.

4. The method according to any one of claims 1 to 3, wherein pre-training of the second machine learning model (MLM₂^{T}) comprises:
- receiving training images, each training image (I) being assigned to one of at least two classes (C),
- selecting a number of patches and optionally neighbor patches from the training image (I),
- generating a patch embedding (PE) for each selected patch (P) and optionally for each neighbor patch (NP),
- generating a joint feature vector based on the patch embeddings of all selected patches and optionally all neighbor patches,
- assigning the joint feature vector to one of the at least two classes (C),
- computing a loss based on a difference between the class to which the joint feature vector is assigned and the class to which the training image (I) is assigned,
- modify parameters of the second machine learning model (MLM₂^{T}) based on the computed loss,
- storing the trained second machine learning model (WM₂^{T}), and/or using the trained second machine learning model (MLM₂^{T}) in the training of the first machine learning model (MLM₁).

5. The method according to claim 4, wherein the classes when pre-training the second machine learning model (MLM₂^{T}) match the classes when training the first machine learning model (MLM₁).

6. The method according to claim 4, wherein the classes when pre-training the second machine learning model (MLM₂^{T}) differ from the classes when training the first machine learning model (MLM₁).

7. The method according to any one of claims 1 to 3, wherein the pre-trained second machine learning model (MLM₂^{T}) is an encoder of an autoencoder, the autoencoder being trained to generate a compressed representation of an image (I) and reconstructing the image (I) for the compressed representation.

8. The method according to any one of claims 1 to 7, wherein each training image (I) is a medical image,
preferably a whole slide image, most preferably a histopathological image of tissue from a patient stained with hematoxylin and eosin.

9. The method according to any one of claims 1 to 8, further comprising:
- receiving a new image,
- generating a plurality of patches based on the new image,
- inputting the patches into the trained first machine learning model (MLM₁),
- receiving a classification result from the trained first machine learning model (MLM₁),
- outputting the classification result.

10. A computer system (1) comprising:
a processor; and
a memory (50) storing an application program configured to perform, when executed by the processor, an operation, the operation comprising:
- providing a first machine learning model (MLM₁), wherein the first machine learning model (MLM₁) is configured to receive an image (I) and assign the image (I) to one of two classes (C),
- providing a pre-trained second machine learning model (MLM₂^{T}), wherein the second machine learning model (MLM₂^{T}) is configured and trained to generate a patch embedding (PE) based on a patch (P) of an image (I),
- receiving training images, each training image (I) being assigned to one of the at least two classes (C),
- for each training image (I):
∘ generating a plurality of patches based on the training image (I),
∘ generating a patch embedding (PE) for each patch (P) of the plurality of patches using the second machine learning model (MLM₂^{T}),
∘ generating a multitude of regions, each region (R) comprising a number of patches,
∘ generating a regional embedding (RE) for each region (R) based on patch embeddings of patches comprised by the region,
- training the first machine learning model (MLM₁) using the training images, wherein the training comprises:
∘ receiving a training image (I),
∘ selecting a number of patches from the training image (I),
∘ generating a patch embedding (PE) for each selected patch (P),
∘ generating a global embedding (GE) based on the patch embeddings of the selected patches and the regional embeddings of regions comprising the selected patches,
∘ assigning the global embedding (GE) to one of the at least two classes (C),
∘ computing a loss based on a difference between the class to which the global embedding (GE) is assigned and the class to which the training image (I) is assigned,
∘ modifying parameters of the first machine learning model (MLM₁) based on the computed loss,
- storing the trained first machine learning model (MLM₁), and/or using the trained first machine learning model (MLM₁) and the second machine learning model (MLM₂^{T}) to classify one or more new images, wherein each region (R) contains a number of patches in the range from 10 to 1000,
wherein the regional embeddings are generated by the pre-trained second machine learning model (MLM₂^{T}) in advance of the training of the first machine learning model (MLM₁), wherein the first machine learning model (MLM₁) is trained, and the trained first machine learning model (MLM₁) is used to assign histopathological images of tissues from patients to one of at least two classes (C), wherein one class comprises images showing tissue in which a NTRK or BRAF gene mutation is present.

11. A non-transitory computer readable medium having stored thereon software instructions that, when executed by a processor of a computer system (1), cause the computer system (1) to execute the following steps:
- providing a first machine learning model (MLM₁), wherein the first machine learning model (MLM₁) is configured to receive an image (I) and assign the image (I) to one of two classes (C),
- providing a pre-trained second machine learning model (MLM₂^{T}), wherein the second machine learning model (MLM₂^{T}) is configured and trained to generate a patch embedding (PE) based on a patch (P) of an image (I),
- receiving training images, each training image (I) being assigned to one of the at least two classes (C),
- for each training image (I):
∘ generating a plurality of patches based on the training image (I),
∘ generating a patch embedding (PE) for each patch (P) of the plurality of patches using the second machine learning model (MLM₂^{T}),
∘ generating a multitude of regions, each region (R) comprising a number of patches,
∘ generating a regional embedding (RE) for each region (R) based on patch embeddings of patches comprised by the region,
- training the first machine learning model (MLM₁) using the training images, wherein the training comprises:
∘ receiving a training image (I),
∘ selecting a number of patches from the training image (I),
∘ generating a patch embedding (PE) for each selected patch (P),
∘ generating a global embedding (GE) based on the patch embeddings of the selected patches and the regional embeddings of regions comprising the selected patches,
∘ assigning the global embedding (GE) to one of the at least two classes (C),
∘ computing a loss based on a difference between the class to which the global embedding (GE) is assigned and the class to which the training image (I) is assigned,
∘ modifying parameters of the first machine learning model (MLM₁) based on the computed loss,
- storing the trained first machine learning model (MLM₁), and/or using the trained first machine learning model (MLM₁) and the second machine learning model (MLM₂^{T}) to classify one or more new images, wherein each region (R) contains a number of patches in the range from 10 to 1000,
wherein the regional embeddings are generated by the pre-trained second machine learning model (MLM₂^{T}) in advance of the training of the first machine learning model (MLM₁), wherein the first machine learning model (MLM₁) is trained, and the trained first machine learning model (MLM₁) is used to assign histopathological images of tissues from patients to one of at least two classes (C), wherein one class comprises images showing tissue in which a NTRK or BRAF gene mutation is present.

12. Use of a trained first machine learning model (MLM₁) for the detection, identification, and/or characterization of tumor types and/or gene mutations in tissues, wherein training of the machine learning model (MLM₁) comprises:
- providing a first machine learning model (MLM₁), wherein the first machine learning model (MLM₁) is configured to receive an image (I) and assign the image (I) to one of two classes (C),
- providing a pre-trained second machine learning model (MLM₂^{T}), wherein the second machine learning model (MLM₂^{T}) is configured and trained to generate a patch embedding (PE) based on a patch (P) of an image (I),
- receiving training images, each training image (I) being assigned to one of the at least two classes (C),
- for each training image (I):
∘ generating a plurality of patches based on the training image (I),
∘ generating a patch embedding (PE) for each patch (P) of the plurality of patches using the second machine learning model (MLM₂^{T}),
∘ generating a multitude of regions, each region (R) comprising a number of patches,
∘ generating a regional embedding (RE) for each region (R) based on patch embeddings of patches comprised by the region (R),
- training the first machine learning model (MLM₁) using the training images, wherein the training comprises:
∘ receiving a training image (I),
∘ selecting a number of patches from the training image (I),
∘ generating a patch embedding (PE) for each selected patch (P),
∘ generating a global embedding (GE) based on the patch embeddings of the selected patches and the regional embeddings of regions comprising the selected patches,
∘ assigning the global embedding (GE) to one of the at least two classes (C),
∘ computing a loss based on a difference between the class to which the global embedding (GE) is assigned and the class to which the training image (I) is assigned,
∘ modifying parameters of the first machine learning model (MLM₁) based on the computed loss,
∘ storing the trained first machine learning model (MLM₁), and/or using the trained first machine learning model (MLM₁) and the second machine learning model (MLM₂^{T}) to classify one or more new images,
wherein each region (R) contains a number of patches in the range from 10 to 1000,
wherein the regional embeddings are generated by the pre-trained second machine learning model (MLM₂^{T}) in advance of the training of the first machine learning model (MLM₁), wherein the first machine learning model (MLM₁) is trained, and the trained first machine learning model (MLM₁) is used to assign histopathological images of tissues from patients to one of at least two classes (C), wherein one class comprises images showing tissue in which a NTRK or BRAF gene mutation is present.

## Patentansprüche

1. Ein computer-implementiertes Verfahren, wobei das Verfahren umfasst:
- Bereitstellen eines ersten maschinellen Lernmodells (MLM₁), wobei das erste maschinelle Lernmodell (MLM₁) konfiguriert ist, ein Bild (I) zu empfangen und das Bild (I) einer von zwei Klassen (C) zuzuordnen,
- Bereitstellen eines vortrainierten zweiten maschinellen Lernmodells (MLM₂^{T}), wobei das zweite maschinelle Lernmodell (MLM₂^{T}) so konfiguriert und trainiert ist, eine Patch-Einbettung (PE) auf der Grundlage eines Patches (P) eines Bildes (I) zu erzeugen,
- Empfangen von Trainingsbildern, wobei jedes Trainingsbild (I) einer der mindestens zwei Klassen (C) zugeordnet ist,
- für jedes Trainingsbild (I):
∘ Erzeugen einer Vielzahl von Patches auf der Grundlage des Trainingsbildes (I),
∘ Erzeugen einer Patch-Einbettung (PE) für jeden Patch (P) der Vielzahl von Patches unter Verwendung des zweiten maschinellen Lernmodells (MLM₂^{T}),
∘ Erzeugen einer Vielzahl von Regionen, wobei jede Region (R) eine Anzahl von Patches umfasst,
∘ Erzeugen einer regionalen Einbettung (RE) für jede Region (R) auf der Grundlage von Patch-Einbettungen von Patches, die die Region umfasst,
- Trainieren des ersten maschinellen Lernmodells (MLM₁) unter Verwendung der Trainingsbilder, wobei das Training Folgendes umfasst:
∘ Empfangen eines Trainingsbildes (I),
∘ Auswählen einer Anzahl von Patches aus dem Trainingsbild (I),
∘ Erzeugen einer Patch-Einbettung (PE) für jeden ausgewählten Patch (P),
∘ Erzeugen einer globalen Einbettung (GE) auf der Grundlage der Patch-Einbettungen der ausgewählten Patches und der regionalen Einbettungen von Regionen, die die ausgewählten Patches umfassen,
∘ Zuordnen der globalen Einbettung (GE) zu einer der mindestens zwei Klassen (C),
∘ Berechnen eines Verlustes, der auf einem Unterschiedz zwischen der Klasse, der die globale Einbettung (GE) zugeordnet ist, und der Klasse, der das Trainingsbild (I) zugeordnet ist, basiert,
∘ Ändern der Parameter des ersten maschinellen Lernmodells (MLM₁) auf der Grundlage des berechneten Verlustes,
- Speichern des trainierten ersten maschinellen Lernmodells (MLM₁) und/oder Verwenden des trainierten ersten maschinellen Lernmodells (MLM₁) und des zweiten maschinellen Lernmodells (MLM₂^{T}) zur Klassifizierung eines oder mehrerer neuer Bilder,
wobei jede Region (R) eine Anzahl von Patches im Bereich von 10 bis 1000 enthält, wobei die regionalen Einbettungen durch das vortrainierte zweite maschinelle Lernmodell (MLM₂^{T}) vor dem Training des ersten maschinellen Lernmodells (MLM₁) erzeugt werden, wobei das erste maschinelle Lernmodell (MLM₁) trainiert wird und das trainierte erste maschinelle Lernmodells (MLM₁) verwendet wird, um histopathologische Bilder von Geweben von Patienten einer von mindestens zwei Klassen (C) zuzuordnen, wobei eine Klasse Bilder umfasst, die Gewebe zeigen, in denen eine NTRK- oder BRAF-Genmutation vorhanden ist.

2. Verfahren nach Anspruch 1, wobei die vom zweiten maschinellen Lernmodell (MLM₂^{T}) erzeugten Patch-Einbettungen vor dem Training des ersten maschinellen Lernmodells (MLM₁) erzeugt und in einem Datenspeicher gespeichert werden.

3. Verfahren nach einem der Ansprüche 1 bis 2, ferner umfassend:
- Erzeugen, für jedes Trainingsbild (I), eines Merkmalsvektors (FV_{R}*), der alle Regionen des Trainingsbildes (I) repräsentiert, basierend auf den regionalen Einbettungen des Trainingsbildes (I),
- Erzeugen der globalen Einbettung (GE) auf der Grundlage der Patch-Einbettungen der ausgewählten Patches, der regionalen Einbettungen von Regionen, die die ausgewählten Patches umfassen, und des Merkmalsvektors (FV_{R}*), der alle Regionen des Trainingsbildes darstellt.

4. Verfahren nach einem der Ansprüche 1 bis 3, wobei das Vortraining des zweiten maschinellen Lernmodells (MLM₂^{T}) Folgendes umfasst:
- Empfangen von Trainingsbildern, wobei jedes Trainingsbild (I) einer von mindestens zwei Klassen (C) zugeordnet ist,
- Auswählen einer Anzahl von Patches und optional von Nachbar-Patches aus dem Trainingsbild (I),
- Erzeugen einer Patch-Einbettung (PE) für jeden ausgewählten Patch (P) und optional für jeden Nachbar-Patch (NP),
- Erzeugen eines gemeinsamen Merkmalsvektors auf der Grundlage der Patch-Einbettungen aller ausgewählten Patches und optional aller Nachbar-Patches,
- Zuordnen des gemeinsamen Merkmalsvektors zu einer der mindestens zwei Klassen (C),
- Berechnen eines Verlustes auf der Grundlage eines Unterschiedsz zwischen der Klasse, der der gemeinsame Merkmalsvektor zugeordnet ist, und der Klasse, der das Trainingsbild (I) zugeordnet ist,
- Ändern der Parameter des zweiten maschinellen Lernmodells (MLM₂^{T}) basierend auf dem berechneten Verlust,
- Speichern des trainierten zweiten maschinellen Lernmodells (MLM₂^{T}) und/oder Verwenden des trainierten zweiten maschinellen Lernmodells (MLM₂^{T}) beim Training des ersten maschinellen Lernmodells (MLM₁).

5. Verfahren nach Anspruch 4, wobei die Klassen beim Vortraining des zweiten maschinellen Lernmodells (MLM₂^{T}) mit den Klassen beim Training des ersten maschinellen Lernmodells (MLM₁) übereinstimmen.

6. Verfahren nach Anspruch 4, wobei sich die Klassen beim Vortraining des zweiten maschinellen Lernmodells (MLM₂^{T}) von den Klassen beim Training des ersten maschinellen Lernmodells (MLM₁) unterscheiden.

7. Verfahren nach einem der Ansprüche 1 bis 3, wobei das vortrainierte zweite maschinelle Lernmodell (MLM₂^{T}) ein Kodierer eines Auto-Kodierers ist, wobei der Auto-Kodierer trainiert is, eine komprimierte Darstellung eines Bildes (I) zu erzeugen und das Bild (I) aus der komprimierten Darstellung zu rekonstruieren.

8. Verfahren nach einem der Ansprüche 1 bis 7, wobei jedes Trainingsbild (I) ein medizinisches Bild, vorzugsweise ein Whole-Slide-Bild, besonders bevorzugt ein histopathologisches Bild von mit Hämatoxylin und Eosin gefärbtem Gewebe eines Patienten ist.

9. Verfahren nach einem der Ansprüche 1 bis 8, ferner umfassend:
- Empfangen eines neuen Bildes,
- Erzeugen einer Vielzahl von Patches auf der Grundlage des neuen Bildes,
- Eingeben der Patches in das trainierte erste maschinelle Lernmodell (MLM₁),
- Empfangen eines Klassifizierungsergebnisses von dem trainierten ersten maschinellen Lernmodell (MLM₁),
- Ausgeben des Klassifizierungsergebnisses.

10. Ein Computersystem (1), umfassend:
einen Prozessor; und
einen Speicher (50), der ein Anwendungsprogramm speichert, das so konfiguriert ist, dass es, wenn es von dem Prozessor ausgeführt wird, eine Operation durchführt, wobei die Operation Folgendes umfasst:
- Bereitstellen eines ersten maschinellen Lernmodells (MLM₁), wobei das erste maschinelle Lernmodell (MLM₁) so konfiguriert ist, ein Bild (I) zu empfangen und das Bild (I) einer von zwei Klassen (C) zuzuordnen,
- Bereitstellen eines vortrainierten zweiten maschinellen Lernmodells (MLM₂^{T}), wobei das zweite maschinelle Lernmodell (MLM₂^{T}) so konfiguriert und trainiert ist, eine Patch-Einbettung (PE) auf der Grundlage eines Patches (P) eines Bildes (I) zu erzeugen,
- Empfangen von Trainingsbildern, wobei jedes Trainingsbild (I) einer der mindestens zwei Klassen (C) zugeordnet ist,
- für jedes Trainingsbild (I):
∘ Erzeugen einer Vielzahl von Patches auf der Grundlage des Trainingsbildes (I),
∘ Erzeugen einer Patch-Einbettung (PE) für jeden Patch (P) der Vielzahl von Patches unter Verwendung des zweiten maschinellen Lernmodells (MLM₂^{T}),
∘ Erzeugen einer Vielzahl von Regionen, wobei jede Region (R) eine Anzahl von Patches umfasst,
∘ Erzeugen einer regionalen Einbettung (RE) für jede Region (R) auf der Grundlage von Patch-Einbettungen von Patches, die die Region umfasst,
- Trainieren des ersten maschinellen Lernmodells (MLM₁) unter Verwendung der Trainingsbilder, wobei das Training Folgendes umfasst:
∘ Empfangen eines Trainingsbildes (I),
∘ Auswählen einer Anzahl von Patches aus dem Trainingsbild (I),
∘ Erzeugen einer Patch-Einbettung (PE) für jeden ausgewählten Patch (P),
∘ Erzeugen einer globalen Einbettung (GE) auf der Grundlage der Patch-Einbettungen der ausgewählten Patches und der regionalen Einbettungen von Regionen, die die ausgewählten Patches umfassen,
∘ Zuordnen der globalen Einbettung (GE) zu einer der mindestens zwei Klassen (C),
∘ Berechnen eines Verlustes, der auf einem Unterschiedz zwischen der Klasse, der die globale Einbettung (GE) zugeordnet ist, und der Klasse, der das Trainingsbild (I) zugeordnet ist, basiert,
∘ Ändern der Parameter des ersten maschinellen Lernmodells (MLM₁) auf der Grundlage des berechneten Verlustes,
- Speichern des trainierten ersten maschinellen Lernmodells (MLM₁) und/oder Verwenden des trainierten ersten maschinellen Lernmodells (MLM₁) und des zweiten maschinellen Lernmodells (MLM₂^{T}) zur Klassifizierung eines oder mehrerer neuer Bilder,
wobei jede Region (R) eine Anzahl von Patches im Bereich von 10 bis 1000 enthält,
wobei die regionalen Einbettungen durch das vortrainierte zweite maschinelle Lernmodell (MLM₂^{T}) vor dem Training des ersten maschinellen Lernmodells (MLM₁) erzeugt werden, wobei das erste maschinelle Lernmodell (MLM₁) trainiert wird und das trainierte erste maschinelle Lernmodell (MLM₁) verwendet wird, um histopathologische Bilder von Geweben von Patienten einer von mindestens zwei Klassen (C) zuzuordnen, wobei eine Klasse Bilder umfasst, die Gewebe zeigen, in denen eine NTRK- oder BRAF-Genmutation vorhanden ist.

11. Nicht-transitorisches computerlesbares Medium mit darauf gespeicherten Softwarebefehlen, die, wenn sie von einem Prozessor eines Computersystems (1) ausgeführt werden, das Computersystem (1) veranlassen, die folgenden Schritte auszuführen:
- Bereitstellen eines ersten maschinellen Lernmodells (MLM₁), wobei das erste maschinelle Lernmodell (MLM₁) konfiguriert ist, ein Bild (I) zu empfangen und das Bild (I) einer von zwei Klassen (C) zuzuordnen,
- Bereitstellen eines vortrainierten zweiten maschinellen Lernmodells (MLM₂^{T}), wobei das zweite maschinelle Lernmodell (MLM₂^{T}) so konfiguriert und trainiert ist, eine Patch-Einbettung (PE) auf der Grundlage eines Patches (P) eines Bildes (I) zu erzeugen,
- Empfangen von Trainingsbildern, wobei jedes Trainingsbild (I) einer der mindestens zwei Klassen (C) zugeordnet ist,
- für jedes Trainingsbild (I):
∘ Erzeugen einer Vielzahl von Patches auf der Grundlage des Trainingsbildes (I),
∘ Erzeugen einer Patch-Einbettung (PE) für jeden Patch (P) der Vielzahl von Patches unter Verwendung des zweiten maschinellen Lernmodells (MLM₂^{T}),
∘ Erzeugen einer Vielzahl von Regionen, wobei jede Region (R) eine Anzahl von Patches umfasst,
∘ Erzeugen einer regionalen Einbettung (RE) für jede Region (R) auf der Grundlage von Patch-Einbettungen von Patches, die die Region umfasst,
- Trainieren des ersten maschinellen Lernmodells (MLM₁) unter Verwendung der Trainingsbilder, wobei das Training Folgendes umfasst:
∘ Empfangen eines Trainingsbildes (I),
∘ Auswählen einer Anzahl von Patches aus dem Trainingsbild (I),
∘ Erzeugen einer Patch-Einbettung (PE) für jeden ausgewählten Patch (P),
∘ Erzeugen einer globalen Einbettung (GE) auf der Grundlage der Patch-Einbettungen der ausgewählten Patches und der regionalen Einbettungen von Regionen, die die ausgewählten Patches umfassen,
∘ Zuordnen der globalen Einbettung (GE) zu einer der mindestens zwei Klassen (C),
∘ Berechnen eines Verlustes, der auf einem Unterschiedz zwischen der Klasse, der die globale Einbettung (GE) zugeordnet ist, und der Klasse, der das Trainingsbild (I) zugeordnet ist, basiert,
∘ Ändern der Parameter des ersten maschinellen Lernmodells (MLM₁) auf der Grundlage des berechneten Verlustes,
- Speichern des trainierten ersten maschinellen Lernmodells (MLM₁) und/oder Verwenden des trainierten ersten maschinellen Lernmodells (MLM₁) und des zweiten maschinellen Lernmodells (MLM₂^{T}) zur Klassifizierung eines oder mehrerer neuer Bilder,
wobei jede Region (R) eine Anzahl von Patches im Bereich von 10 bis 1000 enthält,
wobei die regionalen Einbettungen durch das vortrainierte zweite maschinelle Lernmodell (MLM₂^{T}) vor dem Training des ersten maschinellen Lernmodells (MLM₁) erzeugt werden, wobei das erste maschinelle Lernmodell (MLM₁) trainiert wird und das trainierte erste maschinelle Lernmodell (MLM₁) verwendet wird, um histopathologische Bilder von Geweben von Patienten einer von mindestens zwei Klassen (C) zuzuordnen, wobei eine Klasse Bilder umfasst, die Gewebe zeigen, in denen eine NTRK- oder BRAF-Genmutation vorhanden ist.

12. Verwendung eines trainierten ersten maschinellen Lernmodells (MLM₁) für die Detektion, Identifikation und/oder Charakterisierung von Tumortypen und/oder Genmutationen in Geweben, wobei das Training des maschinellen Lernmodells (MLM₁) umfasst:
- Bereitstellen eines ersten maschinellen Lernmodells (MLM₁), wobei das erste maschinelle Lernmodell (MLM₁) so konfiguriert ist, dass es ein Bild (I) empfängt und das Bild (I) einer von zwei Klassen (C) zuordnet,
- Bereitstellen eines vortrainierten zweiten maschinellen Lernmodells (MLM₂^{T}), wobei das zweite maschinelle Lernmodell (MLM₂^{T}) so konfiguriert und trainiert ist, dass es eine Patch-Einbettung (PE) auf der Grundlage eines Patches (P) eines Bildes (I) erzeugt,
- Empfangen von Trainingsbildern, wobei jedes Trainingsbild (I) einer der mindestens zwei Klassen (C) zugeordnet ist,
- für jedes Trainingsbild (I):
∘ Erzeugen einer Vielzahl von Patches auf der Grundlage des Trainingsbildes (I),
∘ Erzeugen einer Patch-Einbettung (PE) für jeden Patch (P) der Vielzahl von Patches unter Verwendung des zweiten maschinellen Lernmodells (MLM₂^{T}),
∘ Erzeugen einer Vielzahl von Regionen, wobei jede Region (R) eine Anzahl von Patches umfasst,
∘ Erzeugen einer regionalen Einbettung (RE) für jede Region (R) auf der Grundlage von Patch-Einbettungen von Patches, die von der Region (R) umfasst werden,
- Trainieren des ersten maschinellen Lernmodells (MLM₁) unter Verwendung der Trainingsbilder, wobei das Training Folgendes umfasst:
∘ das Empfangen eines Trainingsbildes (I),
∘ Auswählen einer Anzahl von Patches aus dem Trainingsbild (I),
∘ Erzeugen einer Patch-Einbettung (PE) für jeden ausgewählten Patch (P),
∘ Erzeugen einer globalen Einbettung (GE) auf der Grundlage der Patch-Einbettungen der ausgewählten Patches und der regionalen Einbettungen von Regionen, die die ausgewählten Patches umfassen,
∘ Zuordnen der globalen Einbettung (GE) zu einer der mindestens zwei Klassen (C),
∘ Berechnen eines Verlustes, der auf einem Unterschied zwischen der Klasse, der die globale Einbettung (GE) zugeordnet ist, und der Klasse, der das Trainingsbild (I) zugeordnet ist, basiert,
∘ Ändern der Parameter des ersten maschinellen Lernmodells (MLM₁) auf der Grundlage des berechneten Verlustes,
∘ Speichern des trainierten ersten maschinellen Lernmodells (MLM₁) und/oder Verwenden des trainierten ersten maschinellen Lernmodells (MLM₁) und des zweiten maschinellen Lernmodells (MLM₂^{T}) zur Klassifizierung eines oder mehrerer neuer Bilder,
wobei jede Region (R) eine Anzahl von Patche im Bereich von 10 bis 1000 enthält,
wobei die regionalen Einbettungen durch das vortrainierte zweite maschinelle Lernmodell (MLM₂^{T}) vor dem Training des ersten maschinellen Lernmodells (MLM₁) erzeugt werden, wobei das erste maschinelle Lernmodell (MLM₁) trainiert wird, und das trainierte erste maschinelle Lernmodell (MLM₁) verwendet wird, um histopathologische Bilder von Geweben von Patienten einer von mindestens zwei Klassen (C) zuzuordnen, wobei eine Klasse Bilder umfasst, die Gewebe zeigen, in denen eine NTRK- oder BRAF-Genmutation vorhanden ist.

## Revendications

1. Une méthode mise en œuvre par ordinateur, la méthode comprenant :
- fournissant un premier modèle d'apprentissage automatique (MLM₁), le premier modèle d'apprentissage automatique (MLM₁) étant configuré pour recevoir une image (I) et attribuer l'image (1) à l'une d'au moins deux classes (C),
- fournissant un deuxième modèle d'apprentissage automatique pré-entraîné (MLM₂^{T}), le deuxième modèle d'apprentissage automatique (MLM₂^{T}) étant configuré et entraîné pour générer un embedding de patch (PE) à partir d'un patch (P) d'une image (1),
- recevant des images d'entraînement, chaque image d'entraînement (I) étant attribuée à l'une d'au moins deux classes (C),
- pour chaque image d'entraînement (I):
∘ générant une pluralité de patchs à partir de l'image d'entraînement (1),
∘ générant un embedding de patch (PE) pour chaque patch (P) de la pluralité de patchs à l'aide du deuxième modèle d'apprentissage automatique (MLM₂^{T}),
∘ générant une multitude de régions, chaque région (R) comprenant un certain nombre de patchs,
∘ générant un embedding régional (RE) pour chaque région (R) sur la base des embeddings de patch des patchs compris dans la région,
- entraînant le premier modèle d'apprentissage automatique (MLM₁) à l'aide des images d'entraînement, l'entraînement comprenant :
∘ recevant une image d'entraînement (I),
∘ sélectionnant un certain nombre de patchs dans l'image d'entraînement (I),
∘ générant un embedding de patch (PE) pour chaque patch sélectionné (P),
∘ générant un embedding global (GE) sur la base des embeddings de patch des patchs sélectionnés et des embeddings régionaux des régions comprenant les patchs sélectionnés,
∘ attribuant l'embedding global (GE) à l'une d'au moins deux classes (C),
∘ calculant une perte sur la base d'une différence entre la classe à laquelle l'embedding global (GE) est attribué et la classe à laquelle l'image d'entraînement (I) est attribuée,
∘ modifiant les paramètres du premier modèle d'apprentissage automatique (MLM₁) sur la base de la perte calculée,
- stockant le premier modèle d'apprentissage automatique entraîné (MLM₁) et/ou utilisant le premier modèle d'apprentissage automatique entraîné (MLM₁) et le deuxième modèle d'apprentissage automatique (MLM₂^{T}) pour classer une ou plusieurs nouvelles images,
chaque région (R) contenant un nombre de patchs compris entre 10 et 1000, les embeddings régionaux étant générés par le deuxième modèle d'apprentissage automatique pré-entraîné (MLM₂^{T}) avant l'entraînement du premier modèle d'apprentissage automatique (MLM₁), le premier modèle d'apprentissage automatique (MLM₁) étant entraîné et le premier modèle d'apprentissage automatique entraîné (MLM₁) étant utilisé pour attribuer des images histopathologiques de tissus de patients à l'une d'au moins deux classes (C), une classe comprenant des images montrant un tissu dans lequel une mutation du gène NTRK ou BRAF est présente.

2. Le procédé selon la revendication 1, dans lequel les embeddings de patch générés par le deuxième modèle d'apprentissage automatique (MLM₂^{T}) sont générés en amont de l'entraînement du premier modèle d'apprentissage automatique (MLM₁) et stockés dans une mémoire de données.

3. Le procédé selon l'une quelconque des revendications 1 à 2, comprenant en outre :
- générant, pour chaque image d'entraînement (1), un vecteur de caractéristiques (FV_{R}*) représentant toutes les régions de l'image d'entraînement (I) sur la base des embeddings régionaux de l'image d'entraînement (I),
- générant l'embedding global (GE) sur la base des embeddings de patch des patchs sélectionnés, des embeddings régionaux des régions comprenant les patchs sélectionnés et du vecteur de caractéristiques (FV_{R}*) représentant toutes les régions de l'image d'entraînement.

4. Le procédé selon l'une quelconque des revendications 1 à 3, **caractérisé en ce que** le pré-entraînement du deuxième modèle d'apprentissage automatique (MLM₂^{T}) comprend :
- recevant des images d'entraînement, chaque image d'entraînement (I) étant attribuée à l'une d'au moins deux classes (C),
- sélectionnant un certain nombre de patchs et, éventuellement, des patchs voisins dans l'image d'entraînement (I),
- générant un embedding de patch (PE) pour chaque patch sélectionné (P) et, éventuellement, pour chaque patch voisin (NP),
- générant un vecteur de caractéristiques conjoint sur la base des embeddings de patch de tous les patchs sélectionnés et, éventuellement, de tous les patchs voisins,
- attribuant le vecteur de caractéristiques conjoint à l'une d'au moins deux classes (C),
- calculant une perte sur la base d'une différence entre la classe à laquelle le vecteur de caractéristiques conjoint est attribué et la classe à laquelle l'image d'entraînement (I) est attribuée,
- modifiant les paramètres du deuxième modèle d'apprentissage automatique (MLM₂^{T}) sur la base de la perte calculée,
- stockant le deuxième modèle d'apprentissage automatique entraîné (MLM₂^{T}) et/ou utilisant le deuxième modèle d'apprentissage automatique entraîné (MLM₂^{T}) lors de l'entraînement du premier modèle d'apprentissage automatique (MLM₁).

5. Le procédé selon la revendication 4, dans lequel les classes lors du pré-entraînement du deuxième modèle d'apprentissage automatique (MLM₂^{T}) correspondent aux classes lors de l'entraînement du premier modèle d'apprentissage automatique (MLM₁).

6. Le procédé selon la revendication 4, dans lequel les classes lors du pré-entraînement du deuxième modèle d'apprentissage automatique (MLM₂^{T}) diffèrent des classes lors de l'entraînement du premier modèle d'apprentissage automatique (MLM₁).

7. Le procédé selon l'une quelconque des revendications 1 à 3, dans lequel le deuxième modèle d'apprentissage automatique pré-entraîné (MLM₂^{T}) est un encodeur d'un auto-encodeur, l'auto-encodeur étant entraîné à générer une représentation compressée d'une image (I) et à reconstruire l'image (I) à partir de la représentation compressée.

8. Le procédé selon l'une quelconque des revendications 1 à 7, dans lequel chaque image d'entraînement (I) est une image médicale, de préférence une image de lame entière, et plus préférentiellement une image histopathologique de tissu d'un patient coloré à l'hématoxyline et à l'éosine.

9. Le procédé selon l'une quelconque des revendications 1 à 8, comprenant en outre :
- recevant une nouvelle image,
- générant une pluralité de patchs à partir de la nouvelle image,
- introduisant les patchs dans le premier modèle d'apprentissage automatique entraîné (MLM₁),
- recevant un résultat de classification du premier modèle d'apprentissage automatique entraîné (MLM₁),
- produisant le résultat de classification.

10. Un système informatique (1) comprenant :
un processeur ; et
une mémoire (50) stockant un programme applicatif configuré pour, lorsqu'il est exécuté par le processeur, réaliser une opération comprenant :
- fournissant un premier modèle d'apprentissage automatique (MLM₁), le premier modèle d'apprentissage automatique (MLM₁) étant configuré pour recevoir une image (I) et attribuer l'image (I) à l'une d'au moins deux classes (C),
- fournissant un deuxième modèle d'apprentissage automatique pré-entraîné (MLM₂^{T}), le deuxième modèle d'apprentissage automatique (MLM₂^{T}) étant configuré et entraîné pour générer un embedding de patch (PE) à partir d'un patch (P) d'une image (I),
- recevant des images d'entraînement, chaque image d'entraînement (I) étant attribuée à l'une d'au moins deux classes (C),
- pour chaque image d'entraînement (I):
∘ générant une pluralité de patchs à partir de l'image d'entraînement (I),
∘ générant un embedding de patch (PE) pour chaque patch (P) de la pluralité de patchs à l'aide du deuxième modèle d'apprentissage automatique (MLM₂^{T}),
∘ générant une multitude de régions, chaque région (R) comprenant un certain nombre de patchs,
∘ générant un embedding régional (RE) pour chaque région (R) sur la base des embeddings de patch des patchs compris dans la région,
- entraînant le premier modèle d'apprentissage automatique (MLM₁) à l'aide des images d'entraînement, l'entraînement comprenant :
∘ recevant une image d'entraînement (I),
∘ sélectionnant un certain nombre de patchs dans l'image d'entraînement (I),
∘ générant un embedding de patch (PE) pour chaque patch sélectionné (P),
∘ générant un embedding global (GE) sur la base des embeddings de patch des patchs sélectionnés et des embeddings régionaux des régions comprenant les patchs sélectionnés,
∘ attribuant l'embedding global (GE) à l'une d'au moins deux classes (C),
∘ calculant une perte sur la base d'une différence entre la classe à laquelle l'embedding global (GE) est attribué et la classe à laquelle l'image d'entraînement (I) est attribuée,
∘ modifiant les paramètres du premier modèle d'apprentissage automatique (MLM₁) sur la base de la perte calculée,
- stockant le premier modèle d'apprentissage automatique entraîné (MLM₁) et/ou utilisant le premier modèle d'apprentissage automatique entraîné (MLM₁) et le deuxième modèle d'apprentissage automatique (MLM₂^{T}) pour classer une ou plusieurs nouvelles images,
chaque région (R) contenant un nombre de patchs compris entre 10 et 1000, les embeddings régionaux étant générés par le deuxième modèle d'apprentissage automatique pré-entraîné (MLM₂^{T}) avant l'entraînement du premier modèle d'apprentissage automatique (MLM₁), le premier modèle d'apprentissage automatique (MLM₁) étant entraîné et le premier modèle d'apprentissage automatique entraîné (MLM₁) étant utilisé pour attribuer des images histopathologiques de tissus de patients à l'une d'au moins deux classes (C), une classe comprenant des images montrant un tissu dans lequel une mutation du gène NTRK ou BRAF est présente.
caratérisée en ce que les embeddings régionaux sont générés par le second modèle d'apprentissage automatique pré-entraîné (MLM₂^{T}) avant l'entraînement du premier modèle d'apprentissage automatique (MLM₁), caratérisée en ce que le premier modèle d'apprentissage automatique (MLM₁) est entraîné, et le premier modèle d'apprentissage automatique (MLM₁) entraîné est utilisé pour attribuer des images histopathologiques de tissus provenant de patients à l'une d'au moins deux classes (C), car une classe comprend des images comprenant des tissus dans lesquels une mutation des gènes NTRK ou BRAF est présente.

11. Un support d'informations non transitoire lisible par ordinateur ayant stocké des instructions logicielles qui, lorsqu'elles sont exécutées par un processeur d'un système informatique (1), amènent le système informatique (1) à exécuter les étapes suivantes :
- fournissant un premier modèle d'apprentissage automatique (MLM₁), le premier modèle d'apprentissage automatique (MLM₁) étant configuré pour recevoir une image (I) et attribuer l'image (I) à l'une d'au moins deux classes (C),
- fournissant un deuxième modèle d'apprentissage automatique pré-entraîné (MLM₂^{T}), le deuxième modèle d'apprentissage automatique (MLM₂^{T}) étant configuré et entraîné pour générer un embedding de patch (PE) à partir d'un patch (P) d'une image (I),
- recevant des images d'entraînement, chaque image d'entraînement (I) étant attribuée à l'une d'au moins deux classes (C),
- pour chaque image d'entraînement (I):
∘ générant une pluralité de patchs à partir de l'image d'entraînement (I),
∘ générant un embedding de patch (PE) pour chaque patch (P) de la pluralité de patchs à l'aide du deuxième modèle d'apprentissage automatique (MLM₂^{T}),
∘ générant une multitude de régions, chaque région (R) comprenant un certain nombre de patchs,
∘ générant un embedding régional (RE) pour chaque région (R) sur la base des embeddings de patch des patchs compris dans la région,
- entraînant le premier modèle d'apprentissage automatique (MLM₁) à l'aide des images d'entraînement, l'entraînement comprenant :
∘ recevant une image d'entraînement (I),
∘ sélectionnant un certain nombre de patchs dans l'image d'entraînement (I),
∘ générant un embedding de patch (PE) pour chaque patch sélectionné (P),
∘ générant un embedding global (GE) sur la base des embeddings de patch des patchs sélectionnés et des embeddings régionaux des régions comprenant les patchs sélectionnés,
∘ attribuant l'embedding global (GE) à l'une d'au moins deux classes (C),
∘ calculant une perte sur la base d'une différence entre la classe à laquelle l'embedding global (GE) est attribué et la classe à laquelle l'image d'entraînement (I) est attribuée,
∘ modifiant les paramètres du premier modèle d'apprentissage automatique (MLM₁) sur la base de la perte calculée,
- stockant le premier modèle d'apprentissage automatique entraîné (MLM₁) et/ou utilisant le premier modèle d'apprentissage automatique entraîné (MLM₁) et le deuxième modèle d'apprentissage automatique (MLM₂^{T}) pour classer une ou plusieurs nouvelles images,
chaque région (R) contenant un nombre de patchs compris entre 10 et 1000, les embeddings régionaux étant générés par le deuxième modèle d'apprentissage automatique pré-entraîné (MLM₂^{T}) avant l'entraînement du premier modèle d'apprentissage automatique (MLM₁), le premier modèle d'apprentissage automatique (MLM₁) étant entraîné et le premier modèle d'apprentissage automatique entraîné (MLM₁) étant utilisé pour attribuer des images histopathologiques de tissus de patients à l'une d'au moins deux classes (C), une classe comprenant des images montrant un tissu dans lequel une mutation du gène NTRK ou BRAF est présente.
caratérisée en ce que les embeddings régionaux sont générés par le second modèle d'apprentissage automatique pré-entraîné (MLM₂^{T}) avant l'entraînement du premier modèle d'apprentissage automatique (MLM₁), le premier modèle d'apprentissage automatique (MLM₁) étant entraîné, et le premier modèle d'apprentissage automatique (MLM₁) entraîné est utilisé pour attribuer des images histopathologiques de tissus provenant de patients à l'une d'au moins deux classes (C), car une classe comprend des images comprenant des tissus dans lesquels une mutation des gènes NTRK ou BRAF est présente.

12. Utilisation d'un premier modèle d'apprentissage automatique (MLM₁) entraîné pour la détection, l'identification et/ou la caractérisation de types de tumeurs et/ou de mutations génétiques dans des tissus, car l'entraînement du modèle d'apprentissage automatique (MLM₁) comprend :
- la fourniture d'un premier modèle d'apprentissage automatique (MLM₁), en ce que le premier modèle d'apprentissage automatique (MLM₁) est configuré pour recevoir une image (I) et attribuer l'image (I) à l'une des deux classes (C),
- fournir un deuxième modèle d'apprentissage automatique pré-entraîné (MLM₂^{T}), car le deuxième modèle d'apprentissage automatique (MLM₂^{T}) est configuré et entraîné pour générer un patch embedding (PE) basé sur un patch (P) d'une image (I),
- recevoir des images d'apprentissage, chaque image d'apprentissage (I) étant affectée à l'une des deux classes au moins (C),
- pour chaque image d'apprentissage (I) :
∘ générer une pluralité de patchs sur la base de l'image d'apprentissage (I),
∘ générant un patch embedding (PE) pour chaque patch (P) de la pluralité de patchs à l'aide du second modèle d'apprentissage automatique (MLM₂^{T}),
∘ générant une multitude de régions, chaque région (R) comprenant un certain nombre de patchs,
∘ générer un encastrement régional (RE) pour chaque région (R) sur la base des encastrements de patchs compris par la région (R),
- entraîner le premier modèle d'apprentissage automatique (MLM₁) à l'aide des images d'entraînement, car l'entraînement comprend :
∘ la réception d'une image d'apprentissage (I),
∘ la sélection d'un certain nombre de patchs à partir de l'image d'apprentissage (I),
∘ la génération d'un encastrement de patch (PE) pour chaque patch sélectionné (P),
∘ la génération d'une intégration globale (GE) basée sur les intégrations de patch des patchs sélectionnés et les intégrations régionales des régions comprenant les patchs sélectionnés,
∘ attribuer l'intégration globale (GE) à l'une des deux classes au moins (C),
∘ calculer une perte basée sur la différence entre la classe à laquelle l'intégration globale (GE) est affectée et la classe à laquelle l'image d'apprentissage (I) est affectée,
∘ modifier les paramètres du premier modèle d'apprentissage automatique (MLM₁) sur la base de la perte calculée,
∘ stocker le premier modèle d'apprentissage automatique entraîné (MLM₁), et/ou utiliser le premier modèle d'apprentissage automatique entraîné (MLM₁) et le second modèle d'apprentissage automatique (MLM₂^{T}) pour classer une ou plusieurs nouvelles images,
caratérisée en ce que chaque région (R) contient un nombre de patchs compris entre 10 et 1000,
caratérisée en ce que les embeddings régionaux sont générés par le second modèle d'apprentissage automatique pré-entraîné (MLM₂^{T}) avant l'entraînement du premier modèle d'apprentissage automatique (MLM₁), le premier modèle d'apprentissage automatique (MLM₁) étant entraîné, et le premier modèle d'apprentissage automatique (MLM₁) entraîné est utilisé pour attribuer des images histopathologiques de tissus provenant de patients à l'une d'au moins deux classes (C), car une classe comprend des images comprenant des tissus dans lesquels une mutation des gènes NTRK ou BRAF est présente.
